(19) Europäisches Patentamt / European Patent Office / Office européen des brevets

(11) **EP 3 979 590 B1**

(12) **EUROPEAN PATENT SPECIFICATION**

(45) Date of publication and mention of the grant of the patent:
**11.06.2025 Bulletin 2025/24**

(21) Application number: **20933299.8**

(22) Date of filing: **29.04.2020**

(51) International Patent Classification (IPC):
**G06F 21/55** (2013.01)      **H04L 12/40** (2006.01)
**B60R 16/023** (2006.01)      **H04L 9/40** (2022.01)

(52) Cooperative Patent Classification (CPC):
**H04L 63/1425; G06N 3/08;** G06N 3/045

(86) International application number:
**PCT/CN2020/087711**

(87) International publication number:
**WO 2021/217477 (04.11.2021 Gazette 2021/44)**

(54) **METHOD AND DEVICE FOR IDENTIFYING ABNORMAL MESSAGE**

VERFAHREN UND VORRICHTUNG ZUR IDENTIFIKATION VON ANOMALEN NACHRICHTEN

PROCÉDÉ ET DISPOSITIF D'IDENTIFICATION DE MESSAGES ANORMAUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.04.2022 Bulletin 2022/14**

(73) Proprietors:
• **Huawei Technologies Co., Ltd.**
  **Longgang**
  **Shenzhen, Guangdong 518129 (CN)**
• **Fraunhofer-Gesellschaft zur Förderung der angewandten Forschung e.V.**
  **80686 München (DE)**

(72) Inventors:
• **RIEKE, Roland**
  **80686 Munich (DE)**
• **ZELLE, Daniel**
  **80686 Munich (DE)**
• **FENZL, Florian**
  **80686 Munich (DE)**
• **WEI, Zhuo**
  **Shenzhen, Guangdong 518129 (CN)**
• **YASMIN, Rehana**
  **Shenzhen, Guangdong 518129 (CN)**

(74) Representative: **Körber, Martin Hans**
  **Mitscherlich PartmbB**
  **Patent- und Rechtsanwälte**
  **Karlstraße 7**
  **80333 München (DE)**

(56) References cited:
EP-A1- 3 113 529        CN-A- 106 170 953
CN-A- 110 865 626       US-A1- 2016 315 958
US-A1- 2016 381 068     US-A1- 2017 163 669
US-B2- 10 419 268

• PARK SEUNGHYUN ET AL: "Malware Detection in Self-Driving Vehicles Using Machine Learning Algorithms", JOURNAL OF ADVANCED TRANSPORTATION, vol. 2020, 17 January 2020 (2020-01-17), US, pages 1 - 9, XP055931039, ISSN: 0197-6729, Retrieved from the Internet <URL:https://downloads.hindawi.com/journals/jat/2020/3035741.pdf> DOI: 10.1155/2020/3035741
• XING CHAOQUN: "The Detection Method of Abnormal Messages based on Deep Neural Network on the CAN Bus :", PROCEEDINGS OF 5TH INTERNATIONAL CONFERENCE ON VEHICLE, MECHANICAL AND ELECTRICAL ENGINEERING, 1 January 2019 (2019-01-01), pages 85 - 96, XP055931051, ISBN: 978-989-7584-12-1, Retrieved from the Internet <URL:https://www.scitepress.org/Papers/2019/88691/88691.pdf> DOI: 10.5220/0008869100850096

EP 3 979 590 B1

• YOUNG CLINTON: "Techniques for utilizing classification towards securing automotive controller area network and machine learning towards the reverse engineering of CAN messages", IOWA STATE UNIVERSITY, 1 January 2020 (2020-01-01), pages 1 - 102, XP055923877, Retrieved from the Internet <URL:https://dr.lib.iastate.edu/server/api/core/bitstreams/19d20f93-1ea8-45bd-8914-07bb5cfa8261/content>

# EP 3 979 590 B1

## Description

### TECHNICAL FIELD

This application relates to the field of information technologies, and more specifically, to a method for identifying an abnormal message, and a method and an apparatus for training an abnormal message identification model.

### BACKGROUND

As a vehicle becomes electric, an electronic control system, a sensor, an actuator, an electronic control unit (electronic control unit, ECU), and a communications interface that are supported by a vehicle-mounted communications network continuously increase, so that the vehicle-mounted communications network and a component that performs communication by using a communications system are increasingly vulnerable to attacks, for example, network attacks, hacker attacks, or interference with an in-vehicle network. This may endanger vehicle safety and performance. As the foregoing electronic control system in the vehicle gets increasingly complex, difficulty in identifying and detecting an abnormal message between components in the vehicle is increased.

At present, an intrusion detection system (intrusion detection system, IDS) is usually used to identify the abnormal message in the vehicle. The IDS is a network security device that monitors network transmission in real time and generates an alarm or takes a proactive response measure when detecting suspicious transmission. The IDS is mainly implemented based on machine learning (machine learning, ML). In other words, an abnormal message identification model is trained according to a machine learning-based method, and information transmitted in the vehicle is identified by using the abnormal message identification model that is obtained through training, so as to improve information transmission security.

Based on an existing abnormal message identification solution, when the abnormal message identification model is trained, only a difference value (for example, an arrival time interval) between respective feature values of two messages is input. Subsequently, the abnormal message is identified based on the abnormal message identification model, as well as based on the difference value between the respective feature values of the two messages. However, in an actual case, every two messages are not transmitted strictly based on a difference value, and every two messages may correspond to a plurality of difference values. In this way, the abnormal message identification model obtained through training based on the difference value is not accurate enough. Consequently, accuracy of identifying the abnormal message based on the abnormal message identification model is reduced. EP 3 113 529 A1 provides a method for providing security to a network, which includes maintaining a timing model of an expected behavior of data communications over the in-vehicle communication network; receiving a message sent over the network; determining based on the model and based on a timing attribute of the message, whether or not the message complies with the model; and if the message does not comply with the model then performing at least one action related to the message.

### SUMMARY

This application provides a method, an apparatus and a computer-readable medium for identifying an abnormal message.

According to a first aspect, a method for identifying an abnormal message is provided according to claim 1.

In this embodiment of this application, a value range corresponding to the difference value between the feature values of the two messages is divided into the plurality of difference classes, and the identifier of the difference class corresponding to the first difference value in the plurality of difference classes is input into the abnormal message identification model, to determine whether the first message is the abnormal message or the non-abnormal message. Therefore, inputting only the difference value (for example, an arrival time interval) between the feature values of the two messages into the abnormal message identification model, as a practice in the conventional technology, is avoided. This helps improve accuracy of identifying an abnormal message based on the abnormal message identification model.

Optionally, the second message is a non-abnormal message. This helps prevent the feature value of the second message from being abnormal because the second message is an abnormal message and affecting the first difference value, and helps improve accuracy of identifying an abnormal message based on the abnormal message identification model.

In a possible implementation, the feature value is an arrival time of a message, and the first difference value is an arrival time interval between an arrival time of the first message and an arrival time of the second message.

In this embodiment of this application, a value range corresponding to the arrival time interval between the arrival times of the two messages is divided into the plurality of difference classes, and the identifier of the difference class that corresponds to the arrival time interval between the arrival time of the first message and the arrival time of the second message and that is in the plurality of difference classes is input into the abnormal message identification model, to

3

determine whether the first message is an abnormal message or a non-abnormal message. This helps improve accuracy of identifying an abnormal message based on the abnormal message identification model.

In a possible implementation, the method further includes: the SEU determines a second difference value between the feature value of the first message and a feature value of a third message, where the third message is a non-abnormal message that is received before the first message is received; and the SEU determines, from the plurality of difference classes, a difference class corresponding to the second difference value. That the SEU inputs an identifier of the difference class corresponding to the first difference value into a pre-stored abnormal message identification model, to determine whether the first message is an abnormal message or a non-abnormal message includes: The SEU inputs, into the abnormal message identification model, the identifier of the difference class corresponding to the first difference value and an identifier of the difference class corresponding to the second difference value, to determine whether the first message is an abnormal message or a non-abnormal message.

In this embodiment of this application, the second difference value between the feature value of the first message and the feature value of the third message is determined, and the identifier of the difference class corresponding to the second difference value and the identifier of the difference class corresponding to the first difference value are input into the abnormal message identification model. This helps improve accuracy of identifying an abnormal message based on the abnormal message identification model.

In a possible implementation, the feature value is an arrival time of the message, and the second difference value is an arrival time interval between an arrival time of the first message and an arrival time of the third message.

In this embodiment of this application, the arrival time interval between the arrival time of the first message and the arrival time of the third message is determined, and the identifier of the difference class corresponding to the arrival time interval between the arrival time of the first message and the arrival time of the third message and the identifier of the difference class corresponding to the arrival time interval between the arrival time of the first message and the arrival time of the second message are input into the abnormal message identification model. This helps improve accuracy of identifying an abnormal message based on the abnormal message identification model.

In a possible implementation, the different value ranges of the difference values corresponding to the different difference classes in the plurality of difference classes belong to a plurality of preset value ranges, the plurality of preset value ranges are obtained by dividing, according to a natural breakpoint algorithm, a first value range of the feature value, an upper limit of the first value range is a maximum value corresponding to the feature value in a training data set of the abnormal message identification model, and a lower limit of the first value range is a minimum value corresponding to the feature value in the data set.

In this embodiment of this application, the first value range corresponding to the feature value is divided into the plurality of value ranges according to the natural breakpoint algorithm, to correspond to the different difference classes. This helps improve reasonableness of division of the plurality of value ranges.

In a possible implementation, the SEU determines feature information of the first message, where the feature information of the first message includes one or more of payload data corresponding to each byte in a valid payload of the first message, a length of the first message, or the message identifier of the first message. That the SEU inputs an identifier of the difference class corresponding to the first difference value into a pre-stored abnormal message identification model includes: the SEU inputs the identifier of the difference class corresponding to the first difference value and the feature information of the first message into the abnormal message identification model.

In this embodiment of this application, the identifier of the difference class corresponding to the first difference value and the feature information of the first message are input into the abnormal message identification model, to help improve accuracy of identifying the abnormal message based on the abnormal message identification model.

An example of a method for training an abnormal message identification model is provided, including: obtaining a training data set, where the training data set includes N first training messages and N identifiers of N difference classes corresponding to N first difference values of the N first training messages, the N first difference values are difference values between feature values of the N first training messages and feature values of corresponding N second training messages, the N first training messages are in a one-to-one correspondence with the N second training messages, the N second training messages are messages that arrive at a target node before the corresponding N first training messages arrive at the target node, different difference classes in the N difference classes correspond to different value ranges of the difference values, and N is a positive integer greater than 1; and training a pre-stored original abnormal message identification model based on the training data set, to obtain an abnormal message identification model, where the abnormal message identification model is used to determine whether a to-be-identified message is an abnormal message or a non-abnormal message.

In this example, the N identifiers of the N difference classes corresponding to the N first difference values of the N first training messages are used as the training data set, and the original abnormal message identification model is trained based on the training data set. This avoids the following case in the conventional technology: The original abnormal message identification model is trained directly based on a difference value (for example, an arrival time interval) between feature values of two messages. This helps improve accuracy of identifying the abnormal message based on the abnormal message identification model.

Optionally, the feature values of the N first training messages may be arrival times at which the N first training messages arrive at the target node, the feature values of the N second training messages may be arrival times at which the N second training messages arrive at the target node, and the N first difference values of the N first training messages may be arrival time intervals between the arrival times at which the N first training messages arrive at the target node and the arrival times at which the N second training messages arrive at the target node.

In this example, the N identifiers of the N difference classes corresponding to the N first difference values of the N first training messages are used as training data in the training data set, and the original abnormal message identification model is trained based on the training data set. This avoids the following case in the conventional technology: the original abnormal message identification model is trained directly based on a difference value (for example, an arrival time interval) between feature values of two messages. This helps improve accuracy of identifying the abnormal message based on the abnormal message identification model.

Optionally, at least some of the N second training messages are the non-abnormal messages. This helps prevent the feature value of the second message from being abnormal because the second message is the abnormal message and affecting the first difference value, and helps improve accuracy of identifying the abnormal message based on the abnormal message identification model.

In a possible implementation, the training data set further includes N identifiers of N difference classes corresponding to N second difference values of the N first training messages, the N second difference values are N difference values between the feature values of the N first training messages and feature values of corresponding N third training messages, the N first training messages are in a one-to-one correspondence with the N third training messages, the N third training messages are messages that arrive at a target node before the corresponding first training messages arrive at the target node, and the N third training messages are the non-abnormal messages.

In this example, the N identifiers of the N difference classes corresponding to the N second difference values of the N first training messages are used as the training data set. The N third training messages are non-abnormal messages, and the original abnormal message identification model is trained based on the training data set. This helps improve accuracy of identifying an abnormal message based on the abnormal message identification model.

Optionally, the feature values of the N first training messages may be arrival times at which the N first training messages arrive at the target node, the feature values of the N third training messages may be arrival times at which the N third training messages arrive at the target node, and the N second difference values of the N first training messages may be arrival time intervals between the arrival times at which the N first training messages at the target node and the arrival times at which the N third training messages arrive at the target node.

In this example, the N identifiers of the N difference classes corresponding to the N second difference values of the N first training messages are used as training data in the training data set, and the original abnormal message identification model is trained based on the training data set. This avoids the following case in the conventional technology: The original abnormal message identification model is trained directly based on a difference value (for example, an arrival time interval) between feature values of two messages. This helps improve accuracy of identifying an abnormal message based on the abnormal message identification model.

In a possible implementation, before the training a pre-stored original abnormal message identification model based on the training data set, to obtain an abnormal message identification model, the method further includes: determining a maximum value of the feature values of the plurality of training messages and a minimum value of the feature values; determining a value range of the feature value based on the maximum value and the minimum value; and dividing the value range of the feature value into a plurality of non-overlapping sub-ranges, where each sub-range corresponds to one first difference class.

In this example, the value range of the feature values is determined based on the maximum value of the feature values of the plurality of training messages and the minimum value of the feature values, the value range of the feature values is divided into the plurality of non-overlapping sub-ranges, and each sub-range corresponds to one first difference class. In other words, a general method for determining a plurality of difference classes is provided, to expand an application scenario of this embodiment of this application.

According to a further aspect, an apparatus for identifying an abnormal message is provided. The apparatus includes units configured to perform any one of the first aspect or the possible implementations of the first aspect.

According to a further aspect, a computer program product is provided. The computer program product includes computer program codes, and when the computer program codes are run on a computer, the computer is caused to perform the methods in the foregoing aspects.

## BRIEF DESCRIPTION OF DRAWINGS

FIG. 1 is a schematic diagram of a system architecture to which an abnormal message identification model is applied according to an embodiment of this application;

FIG. 2 is a schematic diagram of a hardware device on which an abnormal message identification model is run according to an embodiment of this application;

FIG. 3 is a functional block diagram of a vehicle 300 to which an embodiment of this application is applicable;

FIG. 4 is a schematic diagram of a conventional abnormal message identification model;

FIG. 5 is a schematic flowchart of a method for identifying an abnormal message according to an embodiment of this application;

FIG. 6 is a schematic diagram of a correspondence between an arrival time interval and a plurality of difference classes according to an embodiment of this application;

FIG. 7 is a schematic diagram of an abnormal message identification model according to an embodiment of this application;

FIG. 8 is a flowchart of a method for identifying an abnormal message according to another embodiment of this application;

FIG. 9 is a schematic diagram of an abnormal message identification model according to another embodiment of this application;

FIG. 10 is a schematic diagram of a system architecture 1000 according to an embodiment of this application;

FIG. 11 is a schematic flowchart of a method for training an abnormal message identification model according to an embodiment of this application;

FIG. 12 is a schematic flowchart of a method for training an abnormal message identification model according to another embodiment of this application;

FIG. 13 is a schematic diagram of an apparatus for identifying an abnormal message according to an embodiment of this application;

FIG. 14 is a schematic diagram of an apparatus for training an abnormal message identification model according to an embodiment of this application; and

FIG. 15 is a schematic diagram of a computing device according to another embodiment of this application.

## DESCRIPTION OF EMBODIMENTS

The following describes technical solutions of this application with reference to accompanying drawings.

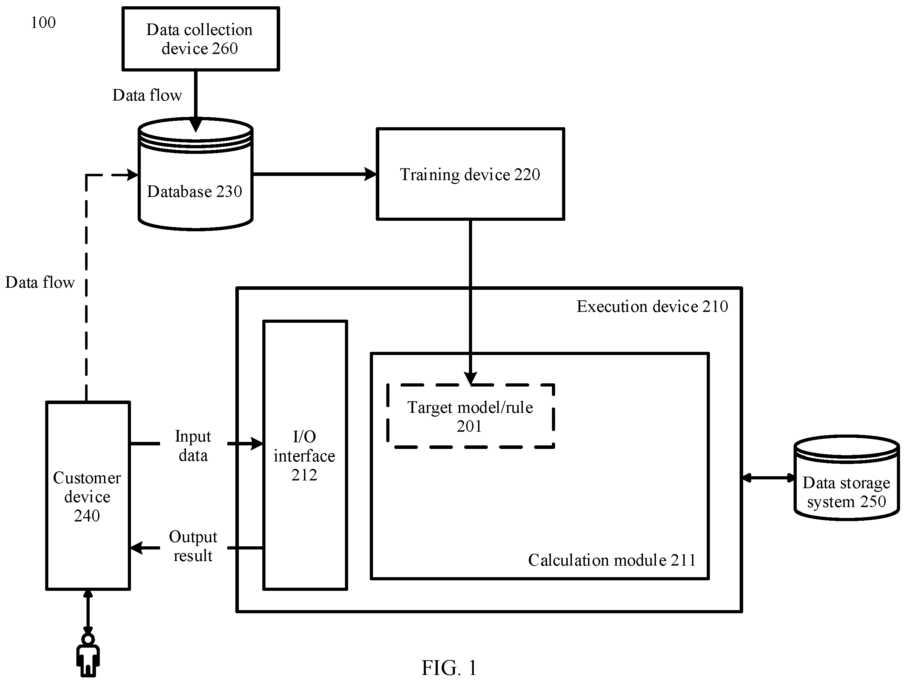

For ease of understanding, the following describes, with reference to FIG. 1, a schematic diagram of a system architecture to which an abnormal message identification model is applied according to an embodiment of this application. The system 100 shown in FIG. 1 includes an execution device 210, a training device 220, a database 230, a client device 240, a data storage system 250, and a data collection device 260.

The data collection device 260 is configured to collect feature data of a message and store the feature data into the database 230. The training device 220 generates a target model/rule 201 (namely, the abnormal message identification model described above) based on training data maintained in the database 230. The following describes in more detail how the training device 220 obtains the target model/rule 201 based on the training data, so that the target model/rule 201 can identify an abnormal message.

It should be noted that, for a training process of the foregoing abnormal message identification model, refer to a method shown in the following description. For brevity, details are not described herein again.

The target model/rule obtained by the training device 220 may be applied to different systems or devices. In the embodiments of this application, the foregoing target model/rule may be applied to a communications network in a ship or an in-vehicle network, for example, a CAN.

The execution device 210 may invoke data, code, and the like in the data storage system 250, or may store data, instructions, and the like into the data storage system 250. Optionally, the execution device 210 may include a calculation module 211 and an input/output (input/output, I/O) interface 212.

The I/O interface 212 is configured to exchange data with an external device, and the "user" may input data into the I/O interface 212 by using the client device 240.

The calculation module 211 processes to-be-identified input message data by using the target model/rule 201, to determine whether a to-be-identified message is the abnormal message or a non-abnormal message.

Finally, the I/O interface 212 returns a processing result to the client device 240, and provides the processing result for the user. Optionally, the client device 240 may be a display apparatus in the ship, to prompt the user that the abnormal message is identified. Alternatively, the client device 240 may be a display apparatus in a vehicle-mounted device, to prompt the user that the abnormal message is identified.

It should be noted that the training device 220 may generate, for different targets, corresponding target models/rules 201 based on different data, so as to provide a better result for the user.

In FIG. 1, the user may manually specify data to be input into the execution device 210, for example, may operate in an interface provided by the I/O interface 212. In another case, the client device 240 may automatically input data into the I/O interface 212 and obtain a result. If the client device 240 needs to obtain permission of the user for automatically inputting data, the user may set corresponding permission on the client device 240. The user may view, on the client device 240, a result output by the execution device 210. A specific presentation form may be a specific manner, for example, display, a voice, or an action. The client device 240 may also be used as a data collection end to store collected feature data of a collected data into the database 230.

It should be noted that, FIG. 1 is merely a schematic diagram of a system architecture according to an embodiment of the present invention. A position relationship between devices, components, modules, and the like shown in the figure does not constitute any limitation. For example, in FIG. 1, the data storage system 250 is an external storage device relative to the execution device 210, and in another case, the data storage system 250 may alternatively be disposed in the execution device 210.

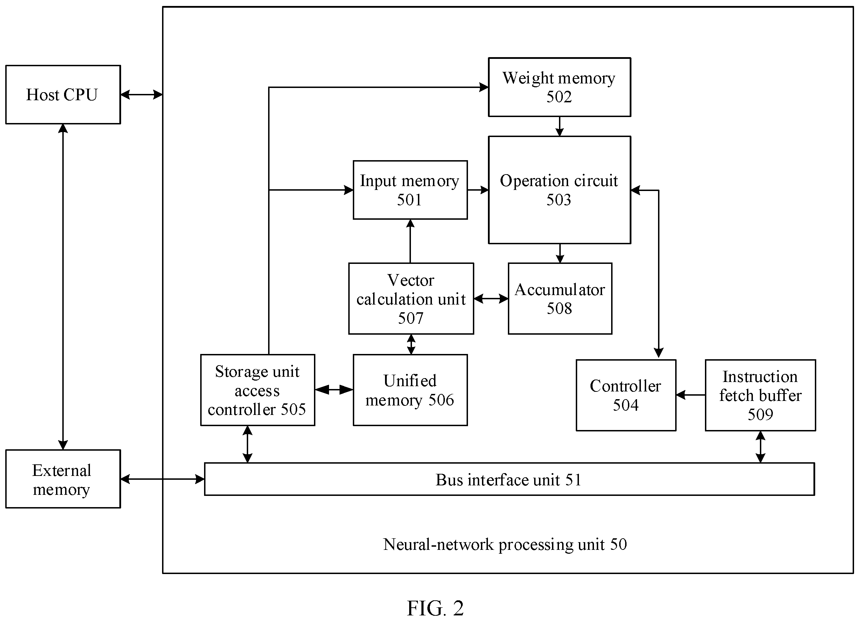

The following describes a schematic diagram of a hardware device on which an abnormal message identification model is run according to an embodiment of this application with reference to FIG. 2. It should be noted that the abnormal message identification model in this embodiment of this application may be implemented by using a neural-network processing unit 50 shown in FIG. 2.

The neural-network processing unit (neural-network processing unit, NPU) 50 is mounted to a host central processing unit (host central processing unit, Host CPU) as a co-processor, and the host CPU allocates tasks. A core part of the NPU is an operation circuit 503, and a controller 504 controls the operation circuit 503 to extract data in a memory (a weight memory or an input memory) and perform an operation.

In some implementations, the operation circuit 503 includes a plurality of processing units (process engine, PE) inside. In some implementations, the operation circuit 503 is a two-dimensional systolic array. The operation circuit 503 may alternatively be a one-dimensional systolic array or another electronic circuit capable of performing mathematical operations such as multiplication and addition. In some implementations, the operation circuit 503 is a general-purpose matrix processor.

For example, it is assumed that there are an input matrix A, a weight matrix B, and an output matrix C. The operation circuit fetches data corresponding to the matrix B from a weight memory 502 and buffers the data in each PE of the operation circuit. The operation circuit fetches data of the matrix A from an input memory 501, to perform a matrix operation on the matrix B, and stores an obtained partial result or an obtained final result of the matrix into an accumulator (accumulator) 508.

A vector calculation unit 507 may perform further processing such as vector multiplication, vector addition, an exponent operation, a logarithm operation, or value comparison on an output of the operation circuit. For example, the vector calculation unit 507 may be configured to perform network calculation, such as pooling (pooling), batch normalization (batch normalization), or local response normalization (local response normalization), at a non-convolution/non-fully connected layer in a neural network.

In some implementations, the vector computation unit 507 can store, in a unified memory 506, a processed output vector. For example, the vector calculation unit 507 can apply a non-linear function to the output of the operation circuit 503, for example, a vector of an accumulated value, to generate an activated value. In some implementations, the vector calculation unit 507 generates a normalized value, a combined value, or both. In some implementations, the processed output vector can be used as an activated input to the operation circuit 503, for example, for use in subsequent layers in the neural network.

The unified memory 506 is configured to store input data and output data.

A storage unit access controller (direct memory access controller, DMAC) 505 is configured to transfer input data in an external memory to the input memory 501 and/or the uniform memory 506, stores weight data that is in the external memory into the weight memory 502, and stores data that is in the uniform memory 506 into the external memory.

A bus interface unit (bus interface unit, BIU) 51 is configured to implement interaction between the host CPU, the DMAC, and an instruction fetch buffer 509 by using a bus.

The instruction fetch buffer (instruction fetch buffer) 509 connected to the controller 504, configured to store an instruction used by the controller 504.

The controller 504 is configured to invoke the instruction buffered in the instruction fetch buffer 509, to control a working process of the operation accelerator.

Usually, the unified memory 506, the input memory 501, the weight memory 502, and the instruction fetch buffer 509 each are an on-chip (On-Chip) memory. The external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

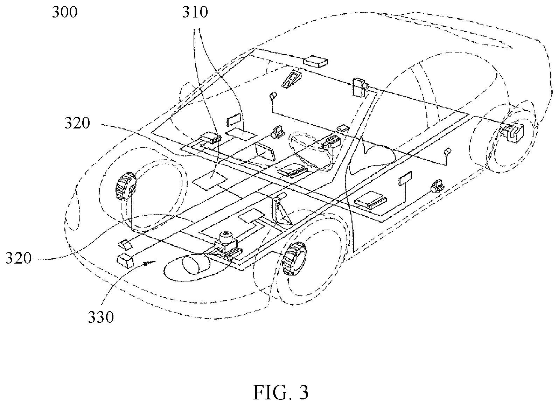

The foregoing describes, with reference to FIG. 1 and FIG. 2, a schematic diagram of a general architecture applicable to the embodiments of this application. The following describes, with reference to FIG. 3, a scenario used in the embodiments of this application by using a vehicle as an example. In other words, a vehicle 300 in FIG. 3 may be used as the client device 240 in the system 100. The NPU 50 shown in FIG. 2 may be used as a part of a security enforcement unit (security enforcement units, SEU) in the vehicle 300, or the NPU 50 may be used as the SEU, to implement a function corresponding to the SEU.

FIG. 3 is a functional block diagram of a vehicle 300 to which an embodiment of this application is applicable. The vehicle 300 shown in FIG. 3 includes an SEU 310, a communications bus 320 of an in-vehicle network, and a function subsystem 330.

The SEU 310 is configured to monitor a message transmitted in the in-vehicle network, for example, identify, based on an abnormal message identification model, a message transmitted in the in-vehicle network, to determine whether there is an abnormal message in the in-vehicle network.

The SEU 310 may be connected to the communications bus 320 of the in-vehicle network, and may monitor a message that passes through the communications bus 320, to detect the abnormal message (also referred to as an abnormal message). Optionally, The SEU 310 may further perform an operation related to the abnormal message, for example, send an alarm.

It should be noted that the message transmitted in the in-vehicle network may be understood as a message transmitted from a first vehicle-mounted device to a second vehicle-mounted device through the in-vehicle network. The first vehicle-mounted device and/or the second vehicle-mounted device may be electronic control units (electronic control unit, ECU) in the vehicle, or may be microcontroller units (microcontroller unit, MCU), or the like. A specific form of the vehicle-mounted device is not limited in this embodiment of this application.

The communications bus 320 in the in-vehicle network may be understood as a communications trunk in the in-vehicle network, and is configured to transmit a message between nodes in the in-vehicle network.

In this embodiment of this application, the message may be in any data format transmitted by using the communications bus, for example, may be a single data packet, signal, or frame. This is not specifically limited in the embodiments of this application.

The communications bus 320 of the in-vehicle network may be a communications bus of any type of in-vehicle network. This is not limited in this embodiment of this application. For example, the in-vehicle network may be an in-vehicle network based on a controller area network (controller area network, CAN). In this case, the message transmitted in the in-vehicle network may be a message according to a CAN protocol. For example, the message may include a CAN ID and valid payload data of a maximum of eight bytes.

Optionally, in the in-vehicle network, messages that have a same function or that are sent for a same purpose may have a same identifier or identification (ID). For example, a CAN ID is carried in the message specified in the CAN protocol.

The function subsystem 330 is configured to implement various functions required by the vehicle 300. For example, a traveling system, a sensor system, a control system, and the like may be included.

The moving system may include a component that provides power for the vehicle to move. In an embodiment, the traveling system may include an engine, an energy source, a transmission apparatus, and a wheel/tire. The transmission apparatus can transfer mechanical power from the engine to the wheel. The transmission apparatus may include a gearbox, a differential, and a drive shaft. In an embodiment, the transmission apparatus may further include another component for example, a clutch.

The sensor system may include a plurality of sensors configured to sense and detect surrounding environment information of the vehicle. For example, the sensor system may include a positioning system, an inertial measurement unit (IMU), a radar, a laser rangefinder, a camera, and the like. The sensor system may further include sensors of an internal system of the monitored vehicle (for example, an in-vehicle air quality monitor, a fuel flow meter, and an oil temperature gauge). One or more pieces of sensor data from these sensors can be used to detect objects and corresponding features (a position, a shape, a direction, a speed, and the like) of the objects. Such detection and identification are key functions of security operations of an autonomous vehicle.

The control system controls operations of the vehicle and components of the vehicle. The control system may include various elements, including a steering system, a throttle, a braking unit, a sensor fusion algorithm, a computer vision system, a route control system, and an obstacle avoidance system.

It should be noted that the function subsystem 330 in this embodiment of this application may further include another subsystem, for example, a steering subsystem. For brevity, details are not described herein again.

Based on an existing abnormal message identification solution, when the abnormal message identification model is trained, only a difference value (for example, an arrival time interval) between feature values of two messages is input. When the abnormal message is identified based on the abnormal message identification model, the difference value between the feature values of the two messages is also used.

However, in an actual case, every two messages are not transmitted strictly based on the same first difference value, and every two messages may correspond to a plurality of first difference values. In this way, the abnormal message identification model obtained through training based on the first difference value is not accurate enough. Consequently, accuracy of identifying the abnormal message based on the abnormal message identification model is reduced.

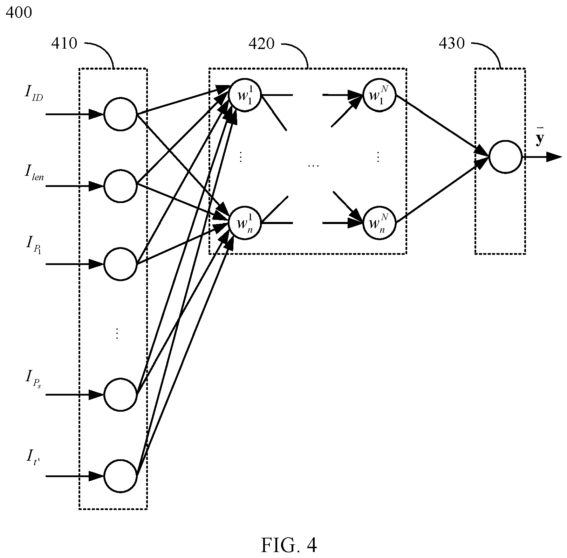

For ease of understanding, the following describes a conventional method for identifying an abnormal message with reference to FIG. 4 by using an example in which a first difference value of feature values of two messages is an arrival time interval and an abnormal message identification model is a deep neural network (Deep Neural Network, DNN). FIG. 4 is a schematic diagram of a conventional abnormal message identification model.

A DNN 400 may be understood as a neural network having many hidden layers 120. "Many" herein does not have a special measurement standard. A multi-layer neural network and a deep neural network are essentially the same thing. The DNN 100 is divided based on locations of different layers, and a neural network in the DNN 400 may be classified into three types: an input layer 410, a hidden layer 420, and an output layer 430. Usually, a first layer is the input layer 410, a last layer is the output layer 430, and a middle layer 420 is the hidden layer. Layers are fully connected. To be specific, any neuron at an $i^{th}$ layer is definitely connected to any neuron at an $(i+1)^{th}$ layer. Although the DNN seems complex, it is not complex for each layer. Simply speaking, the DNN is the following linear relationship expression: $\vec{y} = \alpha(\mathbf{W}\vec{x} + b)$, where $\vec{x}$ is an input vector, $\vec{y}$ is an output vector, $b$ is an offset vector, $\mathbf{W}$ is a weight matrix (also referred to as a coefficient), and $\alpha()$ is an activation function. Each layer simply performs such a simple operation on the input vector to obtain the output vector. Because there are a large quantity of DNN layers, there are a large quantity of coefficients and a large quantity of offset vectors. An L-layer DNN is used as an example. For example, a linear coefficient of a $j^{th}$ neuron at a $l^{th}$ layer is defined as $w_j^l$, where $j = (1,2,\cdots, n)$, $L = (1,2,\cdots, N)$, n and N are positive integers. A superscript $l$ represents a quantity of layers at which a coefficient $w$ is located, and a subscript corresponds to an index $j$ at an output $l$ layer and an index $k$ at an input $l$ layer. Note that the input layer has no parameters. In the deep neural network, more hidden layers make the network more capable of describing a complex case in the real world. Theoretically, a model with more parameters indicates higher complexity and a larger "capacity", and indicates that the model can be used to complete a more complex learning task.

When the DNN is used as an abnormal message identification model, the input vector $\vec{x}$ includes payload data $I_{P_1}$, $I_{P_2}$, ..., $I_{P_s}$ of each bit in a valid payload of a to-be-identified message, a length $I_{len}$ of the to-be-identified message, an identifier $I_{ID}$ corresponding to the to-be-identified message, and an arrival time interval $I_{diff}$ between the to-be-identified message and a previous message. The output vector $\vec{y}$ may be used to indicate whether the to-be-identified message is an abnormal message or a non-abnormal message.

In other words, in a conventional solution, because messages with a same ID in an in-vehicle network are periodically transmitted, when the to-be-identified message is identified based on the abnormal message identification model, $I_{diff}$ between the to-be-identified message and the previous message needs to be input into the abnormal message identification model, and the to-be-identified message is determined as the abnormal message or the non-abnormal message based on a degree of difference between $I_{diff}$ and a preset period.

However, in an actual message transmission process, not all messages with the same ID are transmitted based on a same period, and the messages with the same ID usually correspond to different periods. In this case, if the to-be-identified message is identified based on the conventional solution, accuracy of the abnormal message identification model is limited.

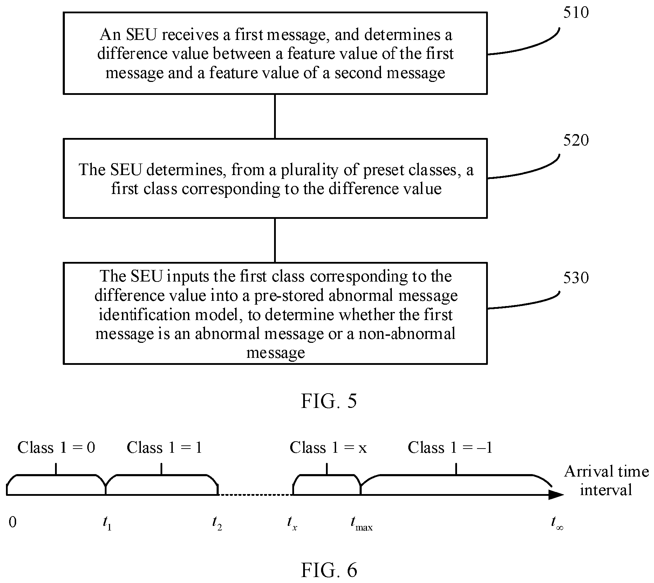

Therefore, to avoid the foregoing problem, an embodiment of this application provides a new method for identifying an abnormal message. To be specific, in a process of identifying a to-be-identified message (also referred to as a "first message" below) based on an abnormal message identification model, a difference class corresponding to a first difference value between a feature value of the first message and a feature value of a second message is input into the abnormal message identification model, where different difference classes correspond to different difference value ranges. This helps improve accuracy of identifying an abnormal message based on the abnormal message identification model. The following describes a method for identifying an abnormal message according to an embodiment of this application with reference to FIG. 5.

FIG. 5 is a schematic flowchart of a method for identifying an abnormal message according to an embodiment of this application. The method 500 shown in FIG. 5 includes step 510 to step 530.

510: An SEU receives a first message, and determines a first difference value between a feature value of the first message and a feature value of a second message, where the second message is a message that is received before the first message is received.

The feature value of the first message and the feature value of the second message are used to measure a same attribute of the messages. For example, the feature value is an arrival time of the message. Alternatively, the feature value of the first message and the feature value of the second message are used to indicate a feature that has a same function in the message, for example, may refer to a value of a valid payload in the message.

Optionally, the feature value may be the value of the valid payload in the message. In this case, the first difference value between the feature value of the first message and the feature value of the second message may be understood as a first difference value between a value of a valid payload in the first message and a value of a valid payload in the second message. For example, if the first message is used to indicate to adjust a vehicle speed of a vehicle to a first vehicle speed, the first message may indicate the first vehicle speed by using the valid payload value in the first message. If the second message is used to indicate to adjust the vehicle speed of the vehicle to a second vehicle speed, the second message may indicate the second vehicle speed by using the value of the valid payload in the second message. The first difference value is used to indicate a variation between the first vehicle speed and the second vehicle speed.

Optionally, the feature value may further indicate an arrival time of the message. In this case, the first difference value between the feature value of the first message and the feature value of the second message may be understood as a time interval between an arrival time of the first message and an arrival time of the second message, where the time interval is also referred to as a first arrival time interval.

Optionally, the second message may be a previous message of the first message. It may be understood that the second message is the previous message received by the SEU before the SEU receives the first message. In other words, the first message and the second message may be two adjacent messages.

Optionally, the second message is the non-abnormal message. In this way, when the first message is subsequently identified as the abnormal message or the non-abnormal message based on the first difference value, accuracy of identifying the first message is improved. This avoids an abnormality of the first difference value caused because the second message is the abnormal message. It is clear that, in this embodiment of this application, it may not be determined whether the second message is the abnormal message or the non-abnormal message.

It should be understood that the second message is the non-abnormal message, and the second message is the previous message of the first message. In other words, the second message is the previous non-abnormal message of the first message. In this case, the second message and the first message may be adjacent messages. In other words, the previous message of the first message is the non-abnormal message, and the previous message is the second message. However, if the previous message of the first message is the abnormal message, the second message is a message that is sent before the first message and that is closest to the arrival time of the first message.

It should be noted that whether the second message is the abnormal message may be determined based on a result of identifying the second message by using the abnormal message identification model.

520: The SEU determines, from a plurality of preset difference classes, a difference class corresponding to the first difference value, where different difference classes in the plurality of difference classes correspond to different value ranges of a difference value, and the difference values may indicate a degree of difference between feature values of two messages.

The difference class corresponding to the first difference value may be understood as a difference class corresponding to a value range to which the first difference value belongs. For example, when the first difference value is the arrival time interval between the first message and the second message, the different difference classes in the plurality of difference classes correspond to different value ranges of the arrival time interval.

FIG. 6 is a schematic diagram of a correspondence between an arrival time interval and a plurality of difference classes according to an embodiment of this application. If the foregoing difference class is represented by using "class 1", value ranges corresponding to the arrival time interval include $[0,t_1]$, $(t_1,t_2]$, $(t_2,t_x]$, $(t_x,t_{max}]$, and $(t_{max},t_\infty]$. $[t_1, t_{max}]$ is a value range of the arrival time interval specified by a vendor, or an arrival time interval within the range is non-abnormal. $(t_{max},t_\infty]$ indicates a value range of the arrival time interval that is out of $[t_1, t_{max}]$. $(t_{max},t_\infty]$ is an abnormal value range of the arrival time interval. Therefore, an identifier of the class 1 corresponding to $[0,t_1]$ is 0, an identifier of a class 1 corresponding to $(t_1, t_2]$ is 1, an identifier of the class 1 corresponding to $(t_2,t_x]$ is 2, an identifier of the class 1 corresponding to $(t_x,t_{max}]$ is x, and an identifier of the class 1 corresponding to $(t_{max},t_\infty]$ is -1.

530: The SEU inputs an identifier of the difference class corresponding to the first difference value into a prestored abnormal message identification model, to determine whether the first message is the abnormal message or the non-abnormal message.

The abnormal message may be understood as a message related to the exception, and may include a message sent based on a deviation from an expected valid payload value (a content value) or a deviation from an expected time sequence.

The ML-based abnormal message identification model may be an ML-based mathematical model, for example, may be a DNN or a convolutional neural network. A specific form of the mathematical model is not limited in this embodiment of this application.

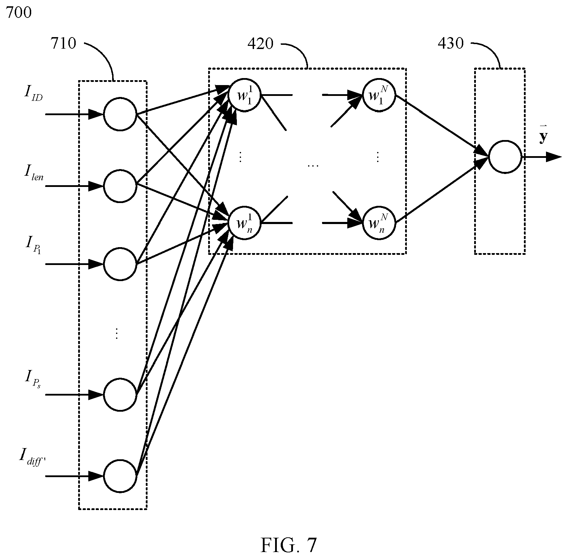

An example in which the abnormal message identification model is the DNN is used to describe the abnormal message identification model in this embodiment of this application with reference to FIG. 7. It should be noted that a model block diagram shown in FIG. 7 is similar to the model structure shown in FIG. 4, and only the input layer and the input vector are improved. Therefore, for brevity, a model framework having a same function uses a same number as that in FIG. 4, and a specific function of the model framework is not described in the following.

FIG. 7 is a schematic diagram of an abnormal message identification model according to an embodiment of this application. The abnormal message identification model 700 shown in FIG. 7 includes an input layer 710, a hidden layer 420, and an output layer 430. An input vector $\vec{\mathbf{X}}$ that is input into the input layer 710 may include an identifier $I_{diff}$ of a difference class to which the first difference value belongs, a value $I_{P_1}, I_{P_2}, ..., I_{P_s}$ of each bit in a first message, a length $I_{len}$ of

the first message, and an identifier $I_{ID}$ of the first message.

Generally, in the field of in-vehicle network communications, messages that have a similar function or a same function have a same message ID, and feature values of the messages that have the similar function or the same function have a more regular change. This better conforms to the foregoing description that when transmission is performed based on a plurality of periods, or when transmission is performed for a plurality of times, a difference between values of valid payloads is not too large. Therefore, the solution in this embodiment of this application is also applicable to this scenario. To be specific, the first message and the second message have a same message ID. For example, in a CAN-based communications network, the first message and the second message have a same CAN ID. It is clear that message identifiers of the first message and the second message may not be limited.

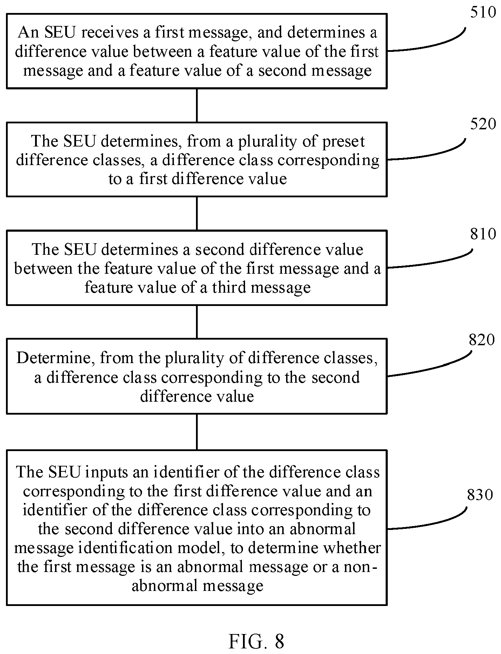

As described above, in a process of identifying the first message, whether the second message is the abnormal message may not be concerned. However, if the second message is the abnormal message, a feature value of the second message affects an identification result of the first message to some extent. To avoid this case and improve accuracy of identifying the abnormal message, in this embodiment of this application, a degree of difference between a feature value of the first message and a feature value of a previous non-abnormal message (also referred to as a third message) may be further input into the abnormal message identification model. The following describes a method for identifying an abnormal message according to another embodiment of this application with reference to FIG. 8.

FIG. 8 is a flowchart of a method for identifying an abnormal message according to another embodiment of this application. Based on the foregoing method 500, the method shown in FIG. 8 further includes step 810 to step 830.

810: An SEU determines a second difference value between a feature value of a first message and a feature value of a third message, where the third message is a non-abnormal message that is received before the first message is received.

A meaning of the feature value of the third message is similar to a meaning of the feature value of the second message. Therefore, for the meaning of the feature value of the third message, refer to the foregoing descriptions. For brevity, details are not described herein again.

It should be noted that when the second message is the non-abnormal message, and the third message and the second message are a same message, the second difference value is the same as the first difference value. When the foregoing second message is an abnormal message, and the second message and the third message are different messages, the second difference value is different from the first difference value.

Optionally, the third message may be a previous non-abnormal message of the first message. It may be understood that the third message is a previous non-abnormal message received by the SEU before the SEU receives the first message. In other words, the first message and the third message may be two adjacent messages, or may be two non-adjacent messages.

820: Determine, from a plurality of difference classes, a difference class corresponding to the second difference value.

As described above, the difference classes correspond to different value ranges of the difference values, and determining, from the plurality of difference classes, the difference class corresponding to the second difference value may be understood as determining, from the plurality of difference classes, a difference class corresponding to a value range to which the second difference value belongs.

830: The SEU inputs an identifier of a difference class corresponding to the first difference value and an identifier of the difference class corresponding to the second difference value into an abnormal message identification model, to determine whether the first message is the abnormal message or the non-abnormal message, where the identifier of the difference class is used to uniquely identify the corresponding difference class.

It should be noted that when the first difference value is the same as the second difference value, the difference class identifier corresponding to the first difference value is the same as the difference class identifier corresponding to the second difference value. When the first difference value is different from the second difference value, the identifier of the difference class corresponding to the first difference value may be the same as or different from the identifier of the difference class corresponding to the second difference value.

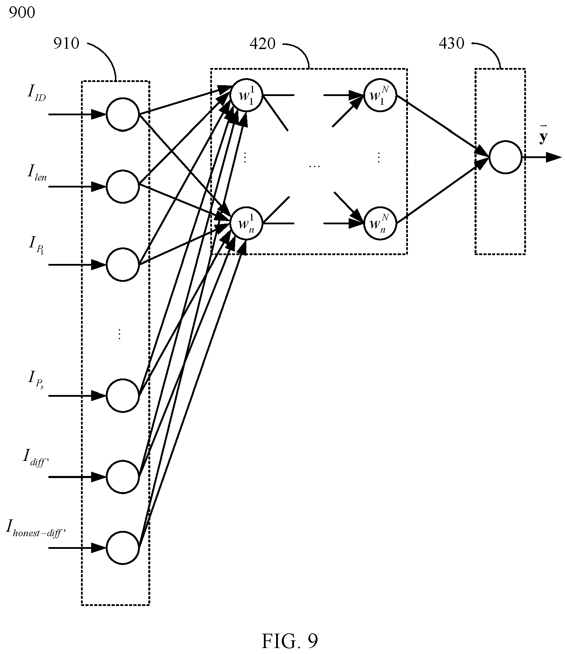

An example in which the abnormal message identification model is the DNN is used to describe the abnormal message identification model in this embodiment of this application with reference to FIG. 8. It should be noted that a model block diagram shown in FIG. 9 is similar to the model structure shown in FIG. 7, and only the input layer and the input vector are improved. Therefore, for brevity, a model framework having a same function uses a same number as that in FIG. 7, and a specific function of the model framework is not described in the following.

FIG. 9 is a schematic diagram of an abnormal message identification model according to another embodiment of this application. The abnormal message identification model 900 shown in FIG. 9 includes an input layer 910, a hidden layer 420, and an output layer 430. An input vector $\vec{X}$ that is input into the input layer 910 may include an identifier $I_{diff}$ of a difference class corresponding to the first difference value, an identifier $I_{honest\text{-}diff}$ of a difference class corresponding to the second difference value, a value $I_{P_1}, I_{P_2}, ..., I_{P_s}$ of each bit in the first message, ..., a length $I_{len}$ of the first message, and an identifier $I_{ID}$ of the first message.

Generally, in the field of in-vehicle network communications, messages that have a similar function or a same function have a same message ID, and feature values of the messages that have the similar function or the same function have a more regular change. This better conforms to the foregoing description that when transmission is performed based on a plurality of periods, or when transmission is performed for a plurality of times, a difference between values of valid payloads is not too large. Therefore, the solution in this embodiment of this application is also applicable to this scenario. To be specific, the first message, the second message, and the third message have a same message ID. For example, in a CAN-based communications network, the first message, the second message, and the third message have the same CAN ID. It is clear that message identifiers of the first message, the second message, and the third message may not be limited.

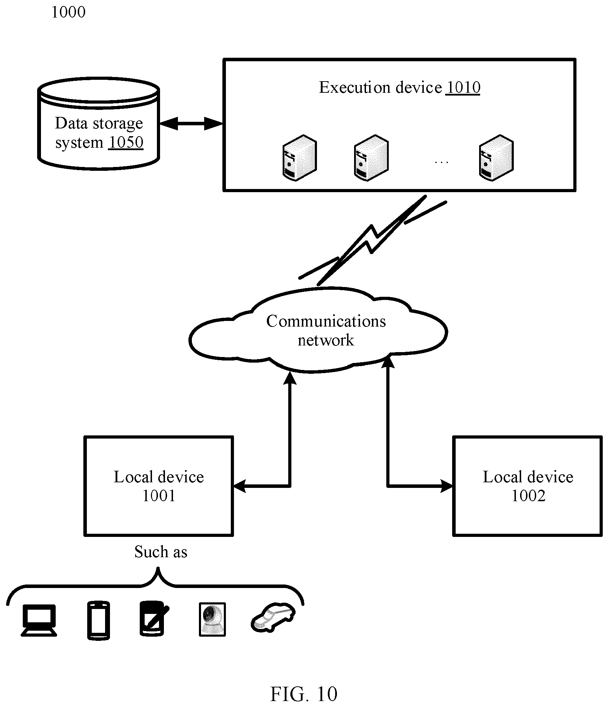

The foregoing describes, with reference to FIG. 5 to FIG. 9, a process of performing, based on the abnormal message identification model, reasoning on whether the first message is the abnormal message in this application. The following describes a process of training the abnormal message identification model with reference to FIG. 10 to FIG. 12. It should be noted that, in the training process and the foregoing reasoning process, a same term, for example, a feature value, is used for a feature that represents a same meaning. For brevity, details are not described below.

The training process in the following may be performed by the foregoing SEU, or may be implemented by a cloud. This is not limited in this embodiment of this application. When the training process is performed by the SEU, for an architecture of the SEU, refer to FIG. 1. The training device 220 trains the abnormal message identification model. For ease of understanding, before a method for training an abnormal message identification model in the embodiments of this application is described, the following mainly describes a cloud computing architecture with reference to FIG. 10, and describes the model training process by using an example in which the abnormal message identification model is an RNN.

FIG. 10 is a schematic diagram of a system architecture 1000 according to an embodiment of this application. An execution device 1010 is implemented by one or more servers. Optionally, the execution device 1010 cooperates with another computing device, for example, a device such as a data storage device, a router, or a load balancer. The execution device 1010 may be disposed on one physical site, or distributed on a plurality of physical sites. The execution device 1010 may implement the method for training an abnormal message identification model in this embodiment of this application by using data in a data storage system 1050 or by invoking program code in a data storage system 1050. A specific training method is described below. For brevity, details are not described herein again.

Users may operate respective user equipment (for example, a local device 1001 and a local device 1002) to interact with the execution device 1010. Each local device may represent any computing device, such as a personal computer, a computer workstation, a smartphone, a tablet, a smart car, or another type of cellular phone.

The local device of each user may interact with the execution device 1010 through a communications network of any communications mechanism/communications standard. The communications network may be a wide area network, a local area network, a point-to-point connection, or any combination thereof.

In another implementation, one or more aspects of the execution device 1010 may be implemented by each local device. For example, the local device 1001 may provide local data for the execution device 1010 or feed back a computation result.

Work of each layer in the DNN may be described by using a mathematical expression: $\vec{\mathbf{y}} = \alpha(\mathbf{W}\vec{\mathbf{x}} + b)$. The work of each layer in the DNN may physically be understood as completing transformation from input space to output space (to be specific, row space to column space of a matrix) by performing five operations on the input space (a set of input vectors). The five operations include: 1. dimension raising/dimension reduction, 2. scaling out/scaling in, 3. rotation, 4. translation, and 5. "bending". The operations of 1, 2, and 3 are performed by $\mathbf{W}\square\vec{x}$, the operation of 4 is performed by $+b$, and the operation of 5 is performed by $a()$. A reason why the word "space" is used herein for description is that a classified object is not a single object, but a type of object. The space refers to a set of all individuals of this type of object. $W$ is a weight vector, and each value in the vector represents a weight value of one neuron in a neural network at this layer. The vector $W$ determines space transformation from the input space to the output space described above, to be specific, a weight $W$ of each layer controls how to transform space. The DNN is trained to finally obtain a weight matrix (a weight matrix constituted by vectors $W$ of a plurality of layers) of all layers of the trained neural network. Therefore, a process of training the neural network is essentially a manner of learning control of spatial transformation, and more specifically, learning a weight matrix.

It is desired that an output of the DNN shall be close, as much as possible, to an actually expected predicted value. Therefore, a predicted value of the current network and an actually expected target value may be compared, and then a weight vector of each layer of neural network is updated based on a difference between the two values (it is clear that there is usually an initialization process before the first update, to be specific, parameters are preconfigured for all layers of the DNN). For example, if the predicted value of the network is excessively large, the weight vector is adjusted to make the predicted value smaller. Such adjustment is continuously performed until the neural network can obtain the actually expected target value through prediction. Therefore, "how to obtain, through comparison, a difference between a predicted value and a target value" needs to be predefined. This is the loss function (loss function) or an objective function (objective function). The loss function and the objective function are important equations used to measure the difference between the predicted value and the target value. The loss function is used as an example. A higher output value (loss) of the loss function indicates a larger difference, and therefore, DNN training becomes a process of reducing the output value as much as possible.

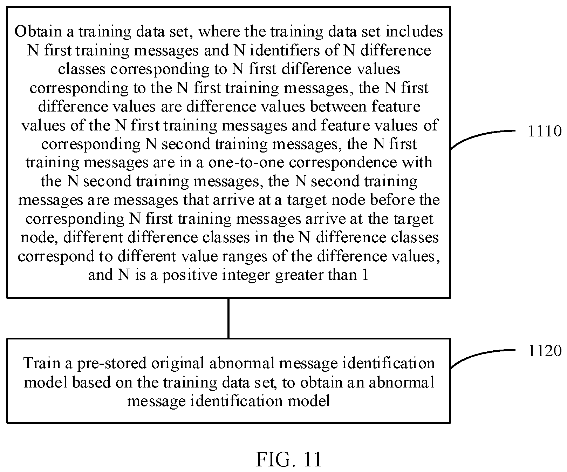

The following describes the method for training an abnormal message identification model according to an embodiment of this application with reference to FIG. 11. FIG. 11 is a schematic flowchart of a method for training an abnormal message identification model according to an embodiment of this application. The method shown in FIG. 11 includes a step 1110 and a step 1120.

1110: Obtain a training data set, where the training data set includes N first training messages and N identifiers of N difference classes corresponding to N first difference values corresponding to the N first training messages, the N first difference values are difference values between feature values of the N first training messages and feature values of corresponding N second training messages, the N first training messages are in a one-to-one correspondence with the N second training messages, the N second training messages are messages that arrive at a target node before the corresponding N first training messages arrive at the target node, different difference classes in the N difference classes correspond to different value ranges of the difference values, and N is a positive integer greater than 1.

The target node is a node that is in the communications network and that receives the N first training messages and the N second training messages.

The N first difference values are difference values between a feature value of each of the N first training messages and a feature value of each of the second training messages. In other words, each first training message has a corresponding second training message.

It should be noted that, generally, to improve diversity of the training number set, the N first difference values may be partially the same, so as to improve accuracy of training the abnormal message identification model.

Optionally, the N first training messages and the N second training messages may have a same identifier. For example, in a CAN in-vehicle network, the N first training messages and the N second training messages may carry a same CAN ID.

Optionally, the N second training messages may be previous messages of the corresponding first training messages.

Optionally, the N second training messages may alternatively be non-abnormal messages, to improve accuracy of training the abnormal message identification model. It is clear that, in this embodiment of this application, whether the N second training messages are abnormal messages or the non-abnormal messages may not be considered.

It should be noted that, if the second training message is the non-abnormal message, and the second training message is the previous message of the first training message, and if the previous training message of the first training message is the non-abnormal message, the previous message is the second training message. If the previous training message of the first training message is the abnormal message, the second training message is a non-abnormal message whose arrival time interval between the second training message and the first training message is the shortest. It should be understood that the foregoing description is performed by using one of the N second training messages as an example, and the description is also applicable to another second training message.

1120: Train a pre-stored original abnormal message identification model based on the training data set, to obtain an abnormal message identification model, where the abnormal message identification model is used to determine whether a to-be-identified message is the abnormal message or the non-abnormal message.

As described above, to further improve accuracy of training the abnormal message identification model, N second difference values, that is, N difference values between feature values of the N first training messages and feature values of corresponding N non-abnormal messages (also referred to as "third training messages") may be input into the original abnormal message identification model.

In other words, the training data set further includes N identifiers of N difference classes corresponding to the N second difference values of the N first training messages, and the N second difference values are the N difference values between the feature values of the N first training messages and the feature values of the corresponding N third training messages. The N first training messages are in a one-to-one correspondence with the N third training messages. The N third training messages are messages that arrive at the target node before the corresponding first training messages arrive at the target node, and the N third training messages are the non-abnormal messages.

Optionally, the N first training messages and the N third training messages may have a same identifier. For example, in a CAN in-vehicle network, the N first training messages and the N third training messages may carry a same CAN ID.

Optionally, the N third training messages may be previous messages of the corresponding first training messages. In this case, the N third training messages may be messages adjacent to the corresponding first training messages, or the N third training messages may be messages that are not adjacent (or spaced) to the corresponding first training messages. A first training message 1 is used as an example. When a previous message of the first training message 1 is the non-abnormal message, a third training message corresponding to the first training message 1 is adjacent to the first training message 1. When the previous message of the first training message 1 is the abnormal message, the third training message corresponding to the first training message 1 is not adjacent to the first training message 1. In this case, the third training message corresponding to the first training message 1 is a non-abnormal message whose arrival time interval between the third training message and the first training message 1 is the shortest.

It should be noted that when a previous training message corresponding to a first training message in the N first training messages is a non-abnormal message, a second training message corresponding to the first training message and a third training message corresponding to the first training message may be one training message. In this case, a first difference value corresponding to the first training message is the same as a second difference value corresponding to the first training message.

Optionally, the feature value may be an arrival time of a message, the N first difference values are arrival time intervals between the N first training messages and the corresponding N second training messages, and the N second difference values are arrival time intervals between the N first training messages and the corresponding N third training messages.

The following describes a possible implementation of the training dataset in this embodiment of this application with reference to Table 1 by using an example in which the feature value is the arrival time. Table 1 lists information corresponding to six messages in the training data set. It should be noted that sequence numbers of the six messages shown in Table 1 are merely for ease of description, and may not exist in an actual training data set.

**Table 1**

| No. | $I_{diff}$ | $I_{ID}$ | $I_{Len}$ | $I_{P1}$ | $I_{P2}$ | $I_{P3}$ | $I_{P4}$ | $I_{P5}$ | $I_{P6}$ | $I_{P7}$ | $I_{P8}$ | $I_{honst\text{-}diff}$ | Label |
|-----|-----|-----|-----|-----|-----|-----|-----|-----|-----|-----|-----|-----|-----|
| 1 | 0 | 768 | 8 | 207 | 188 | 78 | 61 | 0 | 0 | 128 | 232 | 0 | 1 |
| 2 | 0 | 768 | 8 | 207 | 188 | 78 | 61 | 0 | 0 | 144 | 216 | 0 | 1 |
| 3 | 0 | 769 | 8 | 20 | 66 | 72 | 112 | 90 | 40 | 144 | 94 | 0 | 1 |
| 4 | 0 | 1810 | 8 | 67 | 127 | 29 | 195 | 107 | 214 | 178 | 228 | -1 | -1 |
| 5 | 2 | 768 | 8 | 207 | 180 | 78 | 61 | 0 | 0 | 160 | 208 | 2 | 1 |
| 6 | 2 | 913 | 8 | 72 | 11 | 0 | 0 | 100 | 50 | 16 | 135 | 2 | 1 |

An identity $I_{diff}$ of a first difference class corresponding to the message 1 is 0, a corresponding message identity $I_{ID}$ is "768", a corresponding message length $I_{Len}$ is 8 bytes, a valid payload in a corresponding first byte $I_{P1}$ is 207, a valid payload in a corresponding second byte $I_{P2}$ is 188, a valid payload in a corresponding third byte $I_{P3}$ is 78, a valid payload in a corresponding fourth byte $I_{P4}$ is 61, a valid payload in a corresponding fifth byte $I_{P5}$ is 0, a valid payload in a corresponding sixth byte $I_{P6}$ is 0, a valid payload in a corresponding seventh byte $I_{P7}$ is 128, a valid payload in a corresponding eighth byte $I_{P8}$ is 232, a corresponding identifier $I_{honst\text{-}diff}$ of a second difference class is 0, and a corresponding label (label) is 1, which indicates that the message 1 is the non-abnormal message.

An identity $I_{diff}$ of a first difference class corresponding to a message 2 is 0, a corresponding message identity $I_{ID}$ is "768", a corresponding message length $I_{Len}$ is 8 bytes, a valid payload in a corresponding first byte $I_{P1}$ is 207, a valid payload in a corresponding second byte $I_{P2}$ is 188, a valid payload in a corresponding third byte $I_{P3}$ is 78, a valid payload in a corresponding fourth byte $I_{P4}$ is 61, a valid payload in a corresponding fifth byte $I_{P5}$ is 0, a valid payload in a corresponding sixth byte $I_{P6}$ is 0, a valid payload in a corresponding seventh byte $I_{P7}$ is 144, a valid payload in a corresponding eighth byte $I_{P8}$ is 216, a corresponding identifier $I_{honst\text{-}diff}$ of a second difference class is 0, and a corresponding label is 1, which indicates that the message 2 is the non-abnormal message.

An identity $I_{diff}$ of a first difference class corresponding to a message 3 is 0, a corresponding message identity $I_{ID}$ is "769", a corresponding message length $I_{Len}$ is 8 bytes, a valid payload in a corresponding first byte $I_{P1}$ is 20, a valid payload in a corresponding second byte $I_{P2}$ is 66, a valid payload in a corresponding third byte $I_{P3}$ is 72, a valid payload in a corresponding fourth byte $I_{P4}$ is 112, a valid payload in a corresponding fifth byte $I_{P5}$ is 90, a valid payload in a corresponding sixth byte $I_{P6}$ is 40, a valid payload in a corresponding seventh byte $I_{P7}$ is 144, a valid payload in a corresponding eighth byte $I_{P8}$ is 94, a corresponding identifier $I_{honst\text{-}diff}$ of a second difference class is 0, and a corresponding label is 1, which indicates that the message 3 is the non-abnormal message.

An identifier $I_{diff}$ of a first difference class corresponding to a message 4 is 0, a corresponding message identifier $I_{ID}$ is "769", a corresponding message length $I_{Len}$ is 8 bytes, a valid payload in a corresponding first byte $I_{P1}$ is 67, a valid payload in a corresponding second byte $I_{P2}$ is 127, a valid payload in a corresponding third byte $I_{P3}$ is 29, a valid payload in a corresponding fourth byte $I_{P4}$ is 195, a valid payload in a corresponding fifth byte $I_{P5}$ is 107, a valid payload in a corresponding sixth byte $I_{P6}$ is 214, a valid payload in a corresponding seventh byte $I_{P7}$ is 178, a valid payload in a corresponding eighth byte $I_{P8}$ is 228, a corresponding identifier $I_{honst\text{-}diff}$ of a second difference class is -1, and a corresponding label is -1, which indicates that the message 4 is the abnormal message.

An identity $I_{diff}$ of a first difference class corresponding to a message 5 is 0, a corresponding message identity $I_{ID}$ is "768", a corresponding message length $I_{Len}$ is 8 bytes, a valid payload in a corresponding first byte $I_{P1}$ is 207, a valid payload in a corresponding second byte $I_{P2}$ is 180, a valid payload in a corresponding third byte $I_{P3}$ is 78, a valid payload in a corresponding fourth byte $I_{P4}$ is 61, a valid payload in a corresponding fifth byte $I_{P5}$ is 0, a valid payload in a corresponding sixth byte $I_{P6}$ is 0, a valid payload in a corresponding seventh byte $I_{P7}$ is 160, a valid payload in a corresponding eighth byte $I_{P8}$ is 208, a corresponding identifier $I_{honst-diff}$ of a second difference class is 2, and a corresponding label is 1, which indicates that the message 5 is the non-abnormal message.

An identifier $I_{diff}$ of a first difference class corresponding to a message 6 is 0, a corresponding message identifier $I_{ID}$ is "913", a corresponding message length $I_{Len}$ is 8 bytes, a valid payload in a corresponding first byte $I_{P1}$ is 72, a valid payload in a corresponding second byte $I_{P2}$ is 11, a valid payload in a corresponding third byte $I_{P3}$ is 0, a valid payload in a corresponding fourth byte $I_{P4}$ is 0, a valid payload of a corresponding fifth byte $I_{P5}$ is 100, a valid payload in a corresponding sixth byte $I_{P6}$ is 50, a valid payload in a corresponding seventh byte $I_{P7}$ is 16, a valid payload in a corresponding eighth byte $I_{P8}$ is 135, a corresponding identifier $I_{honst-diff}$ of a second difference class is 2, and a corresponding label is 1, which indicates that the message 6 is the non-abnormal message.

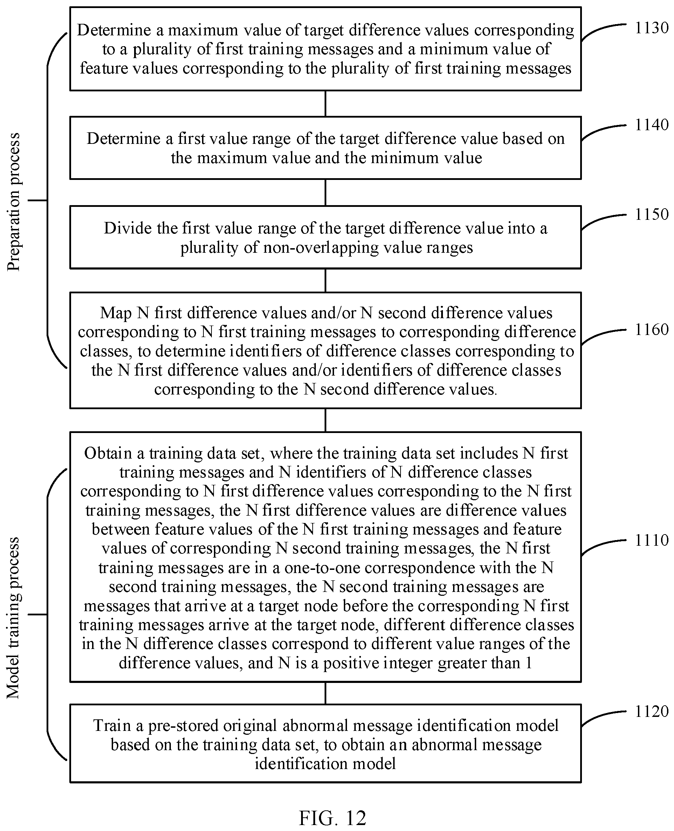

When the training data is actually obtained, a difference value (for example, the first difference value and/or the second difference value) between the feature values of the two messages may be directly obtained. Therefore, before the difference value is mapped to the difference class to obtain the training data set shown in Table 1, the difference classes need to be classified based on possible value ranges of the difference values, so that different difference classes correspond to the different value ranges of the difference values. That is, before step 1110, the foregoing method further includes step 1130 to step 1150. FIG. 12 is a schematic flowchart of a method for training an abnormal message identification model according to another embodiment of this application.

1130: Determine a maximum value of target difference values corresponding to a plurality of first training messages and a minimum value of feature values corresponding to the plurality of first training messages.

The target difference value may be the first difference value in the foregoing description, or may be the second difference value in the foregoing description.

The plurality of first training messages may be the N first training messages included in the training data set, or may be first training messages unrelated to the N first training messages included in the training data set. This is not specifically limited in this embodiment of this application.

1140: Determine a first value range of the target difference value based on the maximum value and the minimum value.

The maximum value may be used as an upper limit of the value range, the minimum value may be used as a lower limit of the value range, and a continuous interval between the upper limit of the value range and the lower limit of the value range may be used as the value range.

1150: Divide the first value range of the target difference value into a plurality of non-overlapping value ranges, where each value range of the target difference value corresponds to one difference class.

Different value ranges in the plurality of value ranges correspond to different difference classes. Finally, the plurality of difference classes corresponding to the plurality of value ranges are the N difference classes in the foregoing description.

It should be noted that there are many methods for dividing the first value range into the plurality of non-overlapping value ranges. For example, the first value range may be divided into the plurality of value ranges according to a Jenks natural breakpoint algorithm. This method aims to determine optimal configuration for classifying the target difference value into the different difference classes. Therefore, this method reduces differences in the difference classes and maximizes differences between the difference classes. The difference classes divided based on the Jenks natural breakpoint algorithm are also called Jenks classes. For another example, the first value range may be directly divided into intervals of a same size. Therefore, the difference classes obtained through division are also referred to as linear classes. For another example, the first value range may be further divided into a plurality of intervals including a same quantity of training messages.

After the value range division is completed, the first difference values and/or the second difference values corresponding to the N first training messages may be mapped to difference class intervals, that is, step 1160: map the N first difference values and/or the N second difference values corresponding to the N first training messages to corresponding difference classes, to determine identifiers of difference classes corresponding to the N first difference values and/or identifiers of difference classes corresponding to the N second difference values. That is, the foregoing step 1130 to step 1160 may be understood as a preparation process before the original abnormal message identification model is trained.

The following describes a generation process, that is, the foregoing "preparation process", from Table 2 to Table 1 by using an example in which the feature value is the arrival time and Table 1 is the training data set. Table 2 shows a possible implementation of the dataset in this embodiment of this application. It should be noted that parameters with a same meaning in Table 2 and Table 1 use a same identifier. For brevity, details are not described below. In addition, sequence numbers of the six messages shown in Table 2 are merely for ease of description, and may not exist in an actual training data set.

**Table 2**

| No. | $t_{diff}$ | $I_{ID}$ | $I_{Len}$ | $I_{P1}$ | $I_{P2}$ | $I_{P3}$ | $I_{P4}$ | $I_{P5}$ | $I_{P6}$ | $I_{P7}$ | $I_{P8}$ | $t_{honst-diff}$ | Label |
|---|---|---|---|---|---|---|---|---|---|---|---|---|---|
| 1 | 0 | 768 | 8 | 207 | 188 | 78 | 61 | 0 | 0 | 128 | 232 | 0 | 1 |
| 2 | 0.014914 | 768 | 8 | 207 | 188 | 78 | 61 | 0 | 0 | 144 | 216 | 0.014914 | 1 |
| 3 | 0.014706 | 769 | 8 | 20 | 66 | 72 | 112 | 90 | 40 | 144 | 94 | 0.014706 | 1 |
| 4 | 0 | 769 | 8 | 67 | 127 | 29 | 195 | 107 | 214 | 178 | 228 | 0 | -1 |
| 5 | 0.020089 | 768 | 8 | 207 | 180 | 78 | 61 | 0 | 0 | 160 | 208 | 0.020089 | 1 |
| 6 | 0.049258 | 913 | 8 | 72 | 11 | 0 | 0 | 100 | 50 | 16 | 135 | 0.049258 | 1 |

A first difference value $t_{diff}$ corresponding to the message 1 is 0, and a corresponding second difference value $t_{honst-diff}$ is 0. A first difference value $t_{diff}$ corresponding to the message 2 is 0.014914, and a corresponding second difference value $t_{honst-diff}$ is 0.014914. A first difference value $t_{diff}$ corresponding to the message 3 is 0.014706, and a corresponding second difference value $t_{honst-diff}$ is 0.014706. A first difference value tdiff corresponding to the message 4 is 0, and a corresponding second difference value $t_{honst-diff}$ is 0. A first difference value $t_{diff}$ corresponding to the message 5 is 0.020089, and a corresponding second difference value $t_{honst-diff}$ is 0.020089. A first difference value $t_{diff}$ corresponding to the message 6 is 0.049258, and a corresponding second difference value $t_{honst-diff}$ is 0.049258.

It is assumed that after the mapping between the value ranges and the difference classes is completed, a message whose message identifier is 768 may correspond to five difference classes. A value range corresponding to a difference class 0 is [0.0, 0.01752499999997781], a value range corresponding to a difference class 1 is (0.01752499999997781, 0.019290000000182772] , and a value range corresponding to a difference class 2 is (0.019290000000182772, 0.020568000000366737] , a value range corresponding to a difference class 3 is (0.020568000000366737, 0.022227000000043518], and a value range corresponding to a difference class 4 is (0.022227000000043518, 0.02717000000001235].

A message whose message identifier is 769 may correspond to five difference classes. A value range corresponding to a difference class 0 is [0.0, 0.01753699999999725], a value range corresponding to a difference class 1 is (0.01753699999999725, 0.019297000000278786], a value range corresponding to a difference class 2 is (0.019297000000278786, 0.020578000000227803], a value range corresponding to a difference class 3 is (0.020578000000227803, 0.022238000000015745] , and a value range corresponding to a difference class 4 is (0.022238000000015745, 0.027170999999995615] .

A message whose message identifier is 913 may correspond to five difference classes. A value range corresponding to a difference class 0 is [0.0, 0.047295999999732885], a value range corresponding to a difference class 1 is (0.047295999999732885, 0.04900800000001482], a value range corresponding to a difference class 2 is (0.04900800000001482, 0.05000099999998042], a value range corresponding to a difference class 3 is (0.05000099999998042, 0.05100100000004204], and a value range corresponding to a difference class 4 is (0.05100100000004204, 0.052717999999913445].

Therefore, if the message identifier of the message 1 is "768", and the corresponding first difference value $t_{diff}$ is 0, which belongs to the value range [0.0, 0.01752499999997781] corresponding to the difference class 0, the corresponding identifier $I_{diff}$ of the first difference class is 0, as shown in Table 1. If the second difference value $t_{honst-diff}$ corresponding to the message 1 is 0, which also belongs to the value range [0.0, 0.01752499999997781] corresponding to the difference class 0, the corresponding identifier $I_{honst-diff}$ of the second difference class is 0, as shown in Table 1.

If the message identifier of the message 2 is "768", and the corresponding first difference value $t_{diff}$ is 0.014914, which belongs to the value range [0.0, 0.01752499999997781] corresponding to the difference class 0, the corresponding identifier $I_{diff}$ of the first difference class is 0, as shown in Table 1. If the second difference value $t_{honst-diff}$ corresponding to the message 2 is 0.014914, which also belongs to the value range [0.0, 0.01752499999997781] corresponding to the difference class 0, the corresponding identifier $I_{honst-diff}$ of the second difference class is 0, as shown in Table 1.

If the message identifier of the message 3 is "769", and the corresponding first difference value $t_{diff}$ is 0, which belongs to the value range [0.0, 0.01753699999999725] corresponding to the difference class 0, the corresponding identifier $I_{diff}$ of the first difference class is 0, as shown in Table 1. If the second difference value $t_{honst-diff}$ corresponding to the message 3 is 0, which also belongs to the value range [0.0, 0.01753699999999725] corresponding to the difference class 0, the corresponding identifier $I_{honst-diff}$ of the second difference class is 0, as shown in Table 1.

If the message identifier of the message 4 is "769", and the corresponding first difference value $t_{diff}$ is 0, which belongs to the value range [0.0, 0.01753699999999725] corresponding to the difference class 0, the corresponding identifier $I_{diff}$ of the first difference class is 0, as shown in Table 1. If the second difference value $t_{honst-diff}$ corresponding to the message 4 is 0, which also belongs to the value range [0.0, 0.01753699999999725] corresponding to the difference class 0, the corresponding identifier $I_{honst-diff}$ of the second difference class is 0, as shown in Table 1.

If the message identifier of the message 5 is "768", and the corresponding first difference value $t_{diff}$ is 0.020089, which belongs to the value range (0.019290000000182772, 0.020568000000366737] corresponding to the difference class 2, the corresponding identifier $I_{diff}$ of the first difference class is 2, as shown in Table 1. If the second difference value $t_{honst-diff}$ corresponding to the message 5 is 0.020089, which also belongs to the value range (0.019290000000182772, 0.020568000000366737] corresponding to the difference class 2, the corresponding identifier $I_{honst-diff}$ of the second difference class is 2, as shown in Table 1.

If the message identifier of the message 6 is "913", and the corresponding first difference value $t_{diff}$ is 0.049258, which belongs to the value range (0.04900800000001482, 0.05000099999998042] corresponding to the difference class 2, the corresponding identifier $I_{diff}$ of the first difference class is 2, as shown in Table 1. If the second difference value $t_{honst-diff}$ corresponding to the message 6 is 0.049258, which also belongs to the value range (0.04900800000001482, 0.05000099999998042] corresponding to the difference class 2, a corresponding identifier $I_{honst-diff}$ of a second difference class is 2, as shown in Table 1.

In conclusion, a process of mapping the arrival time intervals to the difference classes shown in Table 2 is completed.

It should be noted that if the foregoing N difference classes (also referred to as the first difference classes) are used to map the first difference values, and the foregoing N difference classes (also referred to as second difference classes) are used to map the second difference values, the first difference class and the second difference class may be a same difference class, or may be different difference classes.

In other words, the first difference class and the second difference class may be separately determined. For a specific process of determining the first difference class and the second difference class, refer to the foregoing description. For brevity, details are not described again.

It should be noted that, in addition to the method shown in FIG. 12, the foregoing preparation process may also be directly configured by a vendor. For example, the vendor uses a plurality of arrival time intervals corresponding to each ID as the value ranges corresponding to the plurality of difference classes. This is not specifically limited in the embodiments of this application.

The method for identifying an abnormal message in this embodiment of this application is described above with reference to the preparation process, the training process, and the inference process. Compared with a conventional method for identifying an abnormal message, the method in this embodiment of this application has relatively high accuracy. The following describes simulation results of accuracy of the solutions in the embodiments of this application in different scenarios with reference to Table 3 and Table 4. Table 3 shows accuracy when the method in this embodiment of this application is applied to camouflage (camouflage) attack evaluation. Table 4 shows accuracy of the method in this embodiment of this application when the method is applied to a random disk operating system (disk operating system, DOS) attack.

It should be noted that, the simulation results in Table 3 and Table 4 are based on that the feature value is the arrival time, each message ID corresponds to six difference classes, and the six difference classes include a difference class used to correspond to a value range of a difference value of an abnormal message.

Table 3 and Table 4 below are respectively based on five aspects of a true positive (True Positives, TP), a false positive/false positive (False Positives, FP), a true negative (True Negative, TN), a false negative/false negative (False Negative FN), accuracy (Accuracy) show a comparison result between the solution in this embodiment of this application and a conventional solution. TP represents a quantity of times that messages are predicted to be a positive and the messages are the positive in a process of performing identification by using the abnormal message identification model. FP indicates a quantity of times that messages are predicted to be the positive and the messages are a negative in the process of performing identification by using the abnormal message identification model. TN indicates a quantity of times that messages are predicted to be the negative and the messages are the negative in the process of performing identification by using the abnormal message identification model. FN indicates a quantity of times that messages are predicted to be the negative and the messages are the positive in the process of performing identification by using the abnormal message identification model.

It should be noted that the negative is used to indicate that the message is an abnormal message, and the positive is used to indicate that the message is a non-abnormal message.

**Table 3**

| Test | Attack type | Input vector | True positive TP | False positive/false positive FP | True negative TN | False negative/false negative FN | Accuracy |
|------|-------------|--------------|------------------|----------------------------------|------------------|----------------------------------|----------|
| C1 | Camouflage attack | Only contain valid payloads of the message | 0 | 0 | 301714 | 5000 | 98.37 |
| C2 | Camouflage attack | Contain valid payloads and a first difference value $t_{diff}$ of the message | 4560 | 1043 | 300671 | 440 | 99.52 |
| C3 | Camouflage attack | Contain valid payloads of the message and an identifier of a linear class corresponding to the first difference value $t_{diff}$ | 4947 | 1172 | 300542 | 53 | 99.60 |
| C4 | Camouflage attack | Contain valid payloads of the message and an identifier of a Jenks class corresponding to the first difference value $t_{diff}$ | 5000 | 1189 | 300525 | 0 | 99.61 |
| C5 | Camouflage attack | Contain valid payloads of the message, an identifier of a linear class corresponding to the first difference value $t_{diff}$, and an identifier of a linear class corresponding to the second difference value $t_{honst\text{-}diff}$ | 3923 | 977 | 300737 | 1077 | 99.33 |
| C6 | Camouflage attack | Contain valid payloads of the message, an identifier of a Jenks class corresponding to the first difference value $t_{diff}$, and an identifier of a Jenks class corresponding to the second difference value $t_{honst\text{-}diff}$ | 4991 | 15 | 301699 | 9 | 99.99 |

Table 3 shows that accuracy obtained by using a method for identifying a camouflage attack in this embodiment of this application is accuracy obtained by testing C3 to C6, where the accuracy is respectively 99.60, 99.61, 99.33, and 99.99. Accuracy obtained by using a conventional method for identifying a camouflage attack is accuracy obtained by testing C1 and C2, where the accuracy is respectively 98.37 and 99.52. As shown in Table 3, the accuracy obtained by testing C3 to C6 is higher than the accuracy obtained by testing C1 and C2.

**Table 4**

| Test | Attack type | Input vector | True positive TP | False positive/false positive FP | True negative TN | False negative/false negative FN | Accuracy |
|------|-------------|--------------|------------------|----------------------------------|------------------|----------------------------------|----------|
| R1 | Random DoS attack | Only contain valid payloads of the message | 31546 | 7216 | 311622 | 453 | 97.81 |
| R2 | Random DoS attack | Contain valid payloads of the message and a first difference value $t_{diff}$ | 31688 | 36 | 318802 | 311 | 99.90 |
| R3 | Random DoS attack | Contain valid payloads of the message and an identifier of a linear class corresponding to the first difference value $t_{diff}$ | 31895 | 59 | 318779 | 104 | 99.95 |
| R4 | Random DoS attack | Contain valid payloads of the message and an identifier of a Jenks class corresponding to the first difference value $t_{diff}$ | 31687 | 57 | 318781 | 312 | 99.89 |
| R5 | Random DoS attack | Contain valid payloads of the message, an identifier of a linear class corresponding to the first difference value $t_{diff}$, and an identifier of a linear class corresponding to the second difference value $t_{honst-diff}$ | 31926 | 6197 | 312641 | 73 | 99.21 |
| R6 | Random DoS attack | Contain valid payloads of the message, an identifier of a Jenks class corresponding to the first difference value $t_{diff}$, and an identifier of a Jenks class corresponding to the second difference value $t_{honst-diff}$ | 31810 | 12 | 318826 | 190 | 99.94 |

Table 4 shows that accuracy obtained by using the method for identifying a random DOS attack in this embodiment of this application is accuracy obtained by testing R3 to R6, where the accuracy is respectively 99.95, 99.89, 98.21, and 99.94. Accuracy obtained by using a conventional method for identifying a random DOS attack is accuracy obtained by testing R1 and R2, which is 97.81 and 99.90 respectively. As shown in Table 4, the accuracy obtained by testing R3 to R6 is generally higher than the accuracy obtained by testing R1 and R2.

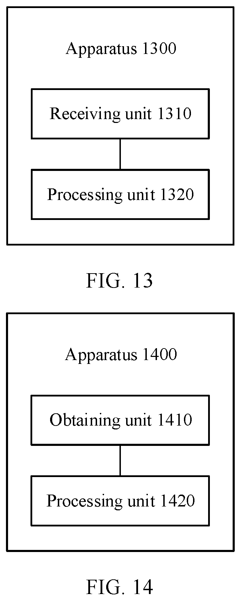

The foregoing describes the method for identifying an abnormal message in the embodiments of this application with reference to FIG. 1 to FIG. 12, and the following describes apparatuses in the embodiments of this application with reference to FIG. 13 to FIG. 15. It should be noted that the apparatus shown in FIG. 13 to FIG. 15 may implement the steps in the foregoing methods. For brevity, details are not described herein again.

FIG. 13 is a schematic diagram of an apparatus for identifying an abnormal message according to an embodiment of this application. The apparatus 1300 shown in FIG. 13 includes a receiving unit 1310 and a processing unit 1320.

The receiving unit 1310 is configured to receive a first message, and determine a first difference value between a feature value of the first message and a feature value of a second message, where the second message is a message that is received before the first message is received.

The processing unit 1320 is configured to determine, from a plurality of preset difference classes, a difference class corresponding to the first difference value, where different difference classes in the plurality of difference classes correspond to different value ranges of the difference value.

The processing unit 1320 is further configured to input an identifier of the difference class corresponding to the first difference value into a pre-stored abnormal message identification model, to determine whether the first message is an abnormal message or a non-abnormal message.

Optionally, the feature value is an arrival time of the message, and the first difference value is an arrival time interval between an arrival time of the first message and an arrival time of the second message.

Optionally, the processing unit 1320 is further configured to determine a second difference value between the feature value of the first message and a feature value of a third message, where the third message is a non-abnormal message that is received before the first message is received; determine, from the plurality of difference classes, a difference class corresponding to the second difference value; and input the identifier of the difference class corresponding to the first difference value and an identifier of the difference class corresponding to the second difference value into the abnormal message identification model, to determine whether the first message is the abnormal message or the non-abnormal message.

Optionally, the feature value is the arrival time of the message, and the second difference value is an arrival time interval between the arrival time of the first message and an arrival time of the third message.

Optionally, the second message is the non-abnormal message.

Optionally, different value ranges of difference values corresponding to the different difference classes in the plurality of difference classes belong to a plurality of preset value ranges, the plurality of preset value ranges are obtained by dividing a first value range of the feature value according to a natural breakpoint algorithm (for example, a Jenks natural breakpoint algorithm). An upper limit of the first value range is a maximum value corresponding to the feature value in a training data set of the abnormal message identification model, and a lower limit of the first value range is a minimum value corresponding to the feature value in the data set.

Optionally, the processing unit is further configured to: determine feature information of the first message, where the feature information of the first message includes one or more of payload data corresponding to each byte in a valid payload of the first message, a length of the first message, or a message identifier of the first message; and input the identifier of the difference class corresponding to the first difference value and the feature information of the first message into the abnormal message identification model.

FIG. 14 is a schematic diagram of an apparatus for training an abnormal message identification model according to an embodiment of this application. The apparatus shown in FIG. 14 includes an obtaining unit 1410 and a processing unit 1420.

The obtaining unit 1410 is configured to obtain a training data set, where the training data set includes N first training messages and N identifiers of N difference classes corresponding to N first difference values of the N first training messages. The N first difference values are difference values between feature values of the N first training messages and feature values of corresponding N second training messages. The N first training messages are in a one-to-one correspondence with the N second training messages. The N second training messages are messages that arrive at a target node before the corresponding N first training messages arrive at the target node, different difference classes in the N difference classes correspond to different value ranges of the difference values, and N is a positive integer greater than 1.

The processing unit 1420 is configured to train a pre-stored original abnormal message identification model based on a training data set, to obtain an abnormal message identification model, where the abnormal message identification model is used to determine whether a to-be-identified message is an abnormal message or a non-abnormal message.

Optionally, the training data set further includes N identifiers of N difference classes corresponding to N second difference values of the N first training messages, the N second difference values are N difference values between the feature values of the N first training messages and feature values of corresponding N third training messages, the N first training messages are in a one-to-one correspondence with the N third training messages, the N third training messages are messages that arrive at the target node before the corresponding first training messages arrive at the target node, and the N third training messages are the non-abnormal messages.

Optionally, the feature value is an arrival time of the message, the N first difference values are arrival time intervals between the N first training messages and the corresponding N second training messages, and the N second difference values are arrival time intervals between the N first training messages and the corresponding N third training messages.

Optionally, the processing unit 1420 is further configured to: determine a maximum value of feature values of the plurality of training messages and a minimum value of the feature values; determine a value range of the feature value based on the maximum value and the minimum value; and divide a value range of the feature value into a plurality of non-overlapping sub-ranges, where each sub-range corresponds to one first difference class.

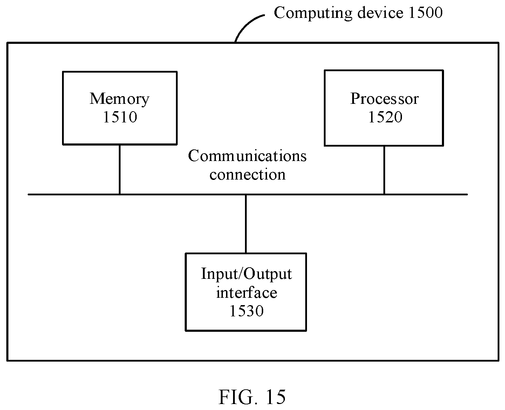

In an optional embodiment, the receiving unit 1310 may be an input/output interface 1530 of the computing device 1500, the processing unit 1320 may be a processor 1520 of the computing device 1500, and the computing device 1500 may further include a memory 1510. Details are shown in FIG. 15.

In an optional embodiment, the obtaining unit 1410 may be an input/output interface 1530 of the computing device 1500, the processing unit 1520 may be a processor 1520 of the computing device 1500, and the computing device 1500 may further include a memory 1510. Details are shown in FIG. 15.

FIG. 15 is a schematic diagram of a computing device according to another embodiment of this application. The computing device 1500 shown in FIG. 15 may include a memory 1510, a processor 1520, and an input/output interface 1530. The memory 1515, the processor 1520, and the input/output interface 1530 are connected by using an internal connection path. The memory 1515 is configured to store instructions. The processor 1520 is configured to execute the instructions stored in the memory 1520, to control the input/output interface 1530 to receive input data and information and output data such as an operation result.

In an implementation process, steps in the foregoing methods can be implemented by using a hardware integrated logical circuit in the processor 1520, or by using instructions in a form of software. The method for identifying an abnormal message and/or the method for training an abnormal message identification model disclosed with reference to the embodiments of this application may be directly performed and completed by a hardware processor, or may be performed and completed by using a combination of hardware and software modules in the processor. A software module may be located in a mature storage medium in the art, such as a random access memory, a flash memory, a read-only memory, a programmable read-only memory, an electrically erasable programmable memory, or a register. The storage medium is located in the memory 1510, and a processor 1520 reads information in the memory 1510 and completes the steps in the foregoing methods in combination with hardware of the processor. To avoid repetition, details are not described herein again.

It should be understood that, the processor in the embodiments of this application may be a central processing unit (central processing unit, CPU), or may further be another general purpose processor, a digital signal processor (digital signal processor, DSP), an application specific integrated circuit (application specific integrated circuit, ASIC), a field programmable gate array (field programmable gate array, FPGA), or another programmable logical device, discrete gate or transistor logical device, discrete hardware component, or the like. The general purpose processor may be a microprocessor, or the processor may be any conventional processor or the like.

It should be understood that in the embodiments of this application, the memory may include a read-only memory and a random access memory, and provide an instruction and data for the processor. A part of the processor may further include a non-volatile random access memory. For example, the processor may further store information of a device type.

It should be understood that in the embodiments of this application, "B corresponding to A" indicates that B is associated with A, and B may be determined according to A. However, it should further be understood that determining A according to B does not mean that B is determined according to A only; that is, B may also be determined according to A and/or other information.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

In the several embodiments provided in this application, it should be understood that the disclosed system, apparatus, and method may be implemented in other manners. For example, the described apparatus embodiment is merely an example. For example, the unit classification is merely logical function classification and may be other classification in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, a magnetic tape), an optical medium (for example, a digital versatile disc (Digital Versatile Disc, DVD)), or a semiconductor medium (for example, a solid-state drive (Solid State Disk, SSD)), or the like.

The foregoing descriptions are merely specific implementations of this application, but are not intended to limit the protection scope of this application. Therefore, the protection scope of this application shall be subject to the protection scope of the claims.

**Claims**

1. A method for identifying an abnormal message, comprising:

   receiving, (510) by a security enforcement unit SEU, a first message, and determining a first difference value between a feature value of the first message and a feature value of a second message, wherein the second message is a message that is received before the first message is received;
   determining (520), by the SEU from a plurality of difference classes, a difference class corresponding to the first difference value, wherein different difference classes in the plurality of difference classes correspond to different value ranges of a difference value; and
   inputting (530), by the SEU, an identifier of the difference class corresponding to the first difference value into a pre-stored abnormal message identification model, to determine whether the first message is an abnormal message or a non-abnormal message,
   wherein the different value ranges of the difference values corresponding to the different difference classes in the plurality of difference classes belong to a plurality of preset value ranges, the plurality of preset value ranges are obtained by dividing, according to a natural breakpoint algorithm, a first value range of the feature wherein the first value range of the feature is based on an upper limit of the first value range and a lower limit of the first value range, the upper limit of the first value range is a maximum value corresponding to the feature value in a training data set of the abnormal message identification model, and the lower limit of the first value range is a minimum value corresponding to the feature value in the data set.

2. The method according to claim 1, wherein the feature value is an arrival time of a message, and the first difference value is an arrival time interval between an arrival time of the first message and an arrival time of the second message.

3. The method according to claim 1 or 2, wherein the method further comprises:

   determining,(810) by the SEU, a second difference value between the feature value of the first message and a feature value of a third message, wherein the third message is a non-abnormal message that is received before the first message is received; and
   determining (820), by the SEU from the plurality of difference classes, a difference class corresponding to the second difference value; and
   the inputting, (530) by the SEU, an identifier of the difference class corresponding to the first difference value into a pre-stored abnormal message identification model, to determine whether the first message is an abnormal message or a non-abnormal message comprises:
   inputting (830), by the SEU into the abnormal message identification model, the identifier of the difference class corresponding to the first difference value and an identifier of the difference class corresponding to the second difference value, to determine whether the first message is an abnormal message or a non-abnormal message.

4.  The method according to claim 3, wherein the feature value is the arrival time of the message, and the second difference value is an arrival time interval between an arrival time of the first message and an arrival time of the third message.

5.  The method according to claim 3 or 4, wherein a message identifier of the first message, a message identifier of the second message, and a message identifier of the third message are the same.

6.  The method according to claim 1 or 2, wherein the second message is a non-abnormal message.

7.  The method according to any one of claims 1 to 6, wherein the method further comprises:

    determining, by the SEU, feature information of the first message, wherein the feature information of the first message comprises one or more of payload data corresponding to each byte in a valid payload of the first message, a length of the first message, or the message identifier of the first message; and
    the inputting, by the SEU, an identifier of the difference class corresponding to the first difference value into a pre-stored abnormal message identification model comprises:
    inputting, by the SEU, the identifier of the difference class corresponding to the first difference value and the feature information of the first message into the abnormal message identification model.

8.  An apparatus (1300) for identifying an abnormal message, comprising:

    a receiving unit (1310), configured to receive a first message, and determine a first difference value between a feature value of the first message and a feature value of a second message, wherein the second message is a message that is received before the first message is received;
    a processing unit (1320), configured to determine, from a plurality of difference classes, a difference class corresponding to the first difference value, wherein different difference classes in the plurality of difference classes correspond to different value ranges of a difference value; and
    the processing unit (1320) is further configured to input an identifier of the difference class corresponding to the first difference value into a pre-stored abnormal message identification model, to determine whether the first message is an abnormal message or a non-abnormal message,
    wherein the different value ranges of the difference values corresponding to the different difference classes in the plurality of difference classes belong to a plurality of preset value ranges, the plurality of preset value ranges are obtained by dividing, according to a natural breakpoint algorithm, a first value range of the feature value, wherein the first value range is determined based on an upper limit of the first value range and a lower limit of the first value range, the upper limit of the first value range is a maximum value corresponding to the feature value in a training data set of the abnormal message identification model, and the lower limit of the first value range is a minimum value corresponding to the feature value in the data set.

9.  The apparatus according to claim 8, wherein the feature value is an arrival time of a message, and the first difference value is an arrival time interval between an arrival time of the first message and an arrival time of the second message.

10. The apparatus according to claim 8 or 9, wherein the processing unit (1320) is further configured to:

    determine a second difference value between the feature value of the first message and a feature value of a third message, wherein the third message is a non-abnormal message that is received before the first message is received;
    determine, from the plurality of difference classes, a difference class corresponding to the second difference value; and
    input, into the abnormal message identification model, the identifier of the difference class corresponding to the first difference value and an identifier of the difference class corresponding to the second difference value, to determine whether the first message is an abnormal message or a non-abnormal message.

11. The apparatus according to claim 10, wherein the feature value is the arrival time of the message, and the second difference value is an arrival time interval between an arrival time of the first message and an arrival time of the third message.

**12.** The apparatus according to claim 10 or 11, wherein a message identifier of the first message, a message identifier of the second message, and a message identifier of the third message are the same.

**13.** The apparatus according to claim 8 or 9, wherein the second message is a non-abnormal message.

**14.** The apparatus according to any one of claims 8 to 13, wherein the processing unit (1320) is further configured to:

determine feature information of the first message, wherein the feature information of the first message comprises one or more of payload data corresponding to each byte in a valid payload of the first message, a length of the first message, or the message identifier of the first message, and
input the identifier of the difference class corresponding to the first difference value and the feature information of the first message into the abnormal message identification model.

**15.** A computer-readable medium, wherein the computer-readable medium stores program codes, and when the computer program codes are run on a computer, the computer is caused to perform the method according to any one of claims 1 to 7.

**Patentansprüche**

**1.** Verfahren zum Identifizieren einer abnormalen Nachricht, umfassend:

Empfangen (510), durch eine Sicherheitsdurchsetzungseinheit, SEU, einer ersten Nachricht und Bestimmen eines ersten Unterschiedswerts zwischen einem Merkmalswert der ersten Nachricht und einem Merkmalswert einer zweiten Nachricht, wobei die zweite Nachricht eine Nachricht ist, die empfangen wird, bevor die erste Nachricht empfangen wird;
Bestimmen (520), durch die SEU aus einer Vielzahl von Unterschiedsklassen, einer Unterschiedsklasse, die dem ersten Unterschiedswert entspricht, wobei unterschiedliche Unterschiedsklassen in der Vielzahl von Unterschiedsklassen unterschiedlichen Wertebereichen eines Unterschiedswerts entsprechen; und
Eingeben (530), durch die SEU, einer Kennung der Unterschiedsklasse, die dem ersten Unterschiedswert entspricht, in ein vorgespeichertes Modell zur Identifizierung abnormaler Nachrichten, um zu bestimmen, ob die erste Nachricht eine abnormale Nachricht oder eine nicht-abnormale Nachricht ist,
wobei die unterschiedlichen Wertebereiche der Unterschiedswerte, die den unterschiedlichen Unterschiedsklassen in der Vielzahl von Unterschiedsklassen entsprechen, zu einer Vielzahl voreingestellter Wertebereiche gehören, die Vielzahl voreingestellter Wertebereiche durch Teilen, gemäß einem natürlichen Haltepunktalgorithmus, eines ersten Wertebereichs des Merkmals erlangt wird, wobei der erste Wertebereich des Merkmals auf einer Obergrenze des ersten Wertebereichs und einer Untergrenze des ersten Wertebereichs basiert, die Obergrenze des ersten Wertebereichs ein Maximalwert ist, der dem Merkmalswert in einem Trainingsdatensatz des Modells zur Identifizierung abnormaler Nachrichten entspricht, und die Untergrenze des ersten Wertebereichs ein Minimalwert ist, der dem Merkmalswert in dem Datensatz entspricht.

**2.** Verfahren nach Anspruch 1, wobei der Merkmalswert eine Ankunftszeit einer Nachricht ist und der erste Unterschiedswert ein Ankunftszeitintervall zwischen einer Ankunftszeit der ersten Nachricht und einer Ankunftszeit der zweiten Nachricht ist.

**3.** Verfahren nach Anspruch 1 oder 2, wobei das Verfahren ferner Folgendes umfasst:

Bestimmen (810), durch die SEU, eines zweiten Unterschiedswerts zwischen dem Merkmalswert der ersten Nachricht und einem Merkmalswert einer dritten Nachricht, wobei die dritte Nachricht eine nicht-abnormale Nachricht ist, die empfangen wird, bevor die erste Nachricht empfangen wird; und
Bestimmen (820), durch die SEU aus der Vielzahl von Unterschiedsklassen, einer Unterschiedsklasse, die dem zweiten Unterschiedswert entspricht; und
das Eingeben (530), durch die SEU, einer Kennung der Unterschiedsklasse, die dem ersten Unterschiedswert entspricht, in ein vorgespeichertes Modell zur Identifizierung abnormaler Nachrichten, um zu bestimmen, ob die erste Nachricht eine abnormale Nachricht oder eine nicht-abnormale Nachricht ist, Folgendes umfasst:
Eingeben (830), durch die SEU in das Modell zur Identifikation abnormaler Nachrichten, der Kennung der Unterschiedsklasse, die dem ersten Unterschiedswert entspricht, und einer Kennung der Unterschiedsklasse, die dem zweiten Unterschiedswert entspricht, um zu bestimmen, ob die erste Nachricht eine abnormale Nachricht oder eine nicht-abnormale Nachricht ist.

4. Verfahren nach Anspruch 3, wobei der Merkmalswert die Ankunftszeit der Nachricht ist und der zweite Unterschiedswert ein Ankunftszeitintervall zwischen einer Ankunftszeit der ersten Nachricht und einer Ankunftszeit der dritten Nachricht ist.

5. Verfahren nach Anspruch 3 oder 4, wobei eine Nachrichtenkennung der ersten Nachricht, eine Nachrichtenkennung der zweiten Nachricht und eine Nachrichtenkennung der dritten Nachricht gleich sind.

6. Verfahren nach Anspruch 1 oder 2, wobei die zweite Nachricht eine nicht-abnormale Nachricht ist.

7. Verfahren nach einem der Ansprüche 1 bis 6, wobei das Verfahren ferner Folgendes umfasst:

Bestimmen, durch die SEU, von Merkmalsinformationen der ersten Nachricht, wobei die Merkmalsinformationen der ersten Nachricht eines oder mehrere von Nutzlastdaten, die jedem Byte in einer gültigen Nutzlast der ersten Nachricht entsprechen, einer Länge der ersten Nachricht oder der Nachrichtenkennung der ersten Nachricht umfassen; und
das Eingeben, durch die SEU, einer Kennung der Unterschiedsklasse, die dem ersten Unterschiedswert entspricht, in ein vorgespeichertes Modell zur Identifizierung abnormaler Nachrichten Folgendes umfasst:
Eingeben, durch die SEU, der Kennung der Unterschiedsklasse, die dem ersten Unterschiedswert entspricht, und der Merkmalsinformationen der ersten Nachricht in das Modell zur Identifizierung abnormaler Nachrichten.

8. Gerät (1300) zum Identifizieren einer abnormalen Nachricht, umfassend:

eine Empfangseinheit (1310), die dazu konfiguriert ist, eine erste Nachricht zu empfangen und einen ersten Unterschiedswert zwischen einem Merkmalswert der ersten Nachricht und einem Merkmalswert einer zweiten Nachricht zu bestimmen, wobei die zweite Nachricht eine Nachricht ist, die empfangen wird, bevor die erste Nachricht empfangen wird;
eine Verarbeitungseinheit (1320), die dazu konfiguriert ist, aus einer Vielzahl von Unterschiedsklassen, eine Unterschiedsklasse, die dem ersten Unterschiedswert entspricht, zu bestimmen, wobei unterschiedliche Unterschiedsklassen in der Vielzahl von Unterschiedsklassen unterschiedlichen Wertebereichen eines Unterschiedswerts entsprechen; und
die Verarbeitungseinheit (1320) ferner dazu konfiguriert ist, eine Kennung der Unterschiedsklasse, die dem ersten Unterschiedswert entspricht, in ein vorgespeichertes Modell zur Identifizierung abnormaler Nachrichten einzugeben, um zu bestimmen, ob die erste Nachricht eine abnormale Nachricht oder eine nicht-abnormale Nachricht ist,
wobei die unterschiedlichen Wertebereiche der Unterschiedswerte, die den unterschiedlichen Unterschiedsklassen in der Vielzahl von Unterschiedsklassen entsprechen, zu einer Vielzahl voreingestellter Wertebereiche gehören, die Vielzahl voreingestellter Wertebereiche durch Teilen, gemäß einem natürlichen Haltepunktalgorithmus, eines ersten Wertebereichs des Merkmalswerts erlangt wird, wobei der erste Wertebereich basierend auf einer Obergrenze des ersten Wertebereichs und einer Untergrenze des ersten Wertebereichs bestimmt wird, die Obergrenze des ersten Wertebereichs ein Maximalwert ist, der dem Merkmalswert in einem Trainingsdatensatz des Modells zur Identifizierung abnormaler Nachrichten entspricht, und die Untergrenze des ersten Wertebereichs ein Minimalwert ist, der dem Merkmalswert in dem Datensatz entspricht.

9. Gerät nach Anspruch 8, wobei der Merkmalswert eine Ankunftszeit einer Nachricht ist und der erste Unterschiedswert ein Ankunftszeitintervall zwischen einer Ankunftszeit der ersten Nachricht und einer Ankunftszeit der zweiten Nachricht ist.

10. Gerät nach Anspruch 8 oder 9, wobei die Verarbeitungseinheit (1320) ferner zu Folgendem konfiguriert ist:

Bestimmen eines zweiten Unterschiedswerts zwischen dem Merkmalswert der ersten Nachricht und einem Merkmalswert einer dritten Nachricht, wobei die dritte Nachricht eine nicht-abnormale Nachricht ist, die empfangen wird, bevor die erste Nachricht empfangen wird;
Bestimmen, aus der Vielzahl von Unterschiedsklassen, einer Unterschiedsklasse, die dem zweiten Unterschiedswert entspricht; und
Eingeben, in das Modell zur Identifikation abnormaler Nachrichten, der Kennung der Unterschiedsklasse, die dem ersten Unterschiedswert entspricht, und einer Kennung der Unterschiedsklasse, die dem zweiten Unterschiedswert entspricht, um zu bestimmen, ob die erste Nachricht eine abnormale Nachricht oder eine nicht-abnormale Nachricht ist.

11. Gerät nach Anspruch 10, wobei der Merkmalswert die Ankunftszeit der Nachricht ist und der zweite Unterschiedswert ein Ankunftszeitintervall zwischen einer Ankunftszeit der ersten Nachricht und einer Ankunftszeit der dritten Nachricht ist.

12. Gerät nach Anspruch 10 oder 11, wobei eine Nachrichtenkennung der ersten Nachricht, eine Nachrichtenkennung der zweiten Nachricht und eine Nachrichtenkennung der dritten Nachricht gleich sind.

13. Gerät nach Anspruch 8 oder 9, wobei die zweite Nachricht eine nicht-abnormale Nachricht ist.

14. Gerät nach einem der Ansprüche 8 bis 13, wobei die Verarbeitungseinheit (1320) ferner zu Folgendem konfiguriert ist:

Bestimmen von Merkmalsinformationen der ersten Nachricht, wobei die Merkmalsinformationen der ersten Nachricht eines oder mehrere von Nutzlastdaten, die jedem Byte in einer gültigen Nutzlast der ersten Nachricht entsprechen, einer Länge der ersten Nachricht oder der Nachrichtenkennung der ersten Nachricht umfassen; und
Eingeben der Kennung der Unterschiedsklasse, die dem ersten Unterschiedswert entspricht, und der Merkmalsinformationen der ersten Nachricht in das Modell zur Identifizierung abnormaler Nachrichten.

15. Computerlesbares Speichermedium, wobei das computerlesbare Speichermedium Programmcodes speichert und, wenn die Computerprogrammcodes auf einem Computer ausgeführt werden, der Computer dazu veranlasst wird, das Verfahren nach einem der Ansprüche 1 bis 7 durchzuführen.

**Revendications**

1. Procédé d'identification d'un message anormal, comprenant :

la réception, (510) par une unité d'application de sécurité SEU, d'un premier message, et la détermination d'une première valeur de différence entre une valeur de caractéristique du premier message et une valeur de caractéristique d'un deuxième message, dans lequel le deuxième message est un message qui est reçu avant que le premier message ne soit reçu ;
la détermination (520), par la SEU à partir d'une pluralité de classes de différence, d'une classe de différence correspondant à la première valeur de différence, dans lequel différentes classes de différence dans la pluralité de classes de différence correspondent à différentes plages de valeurs d'une valeur de différence ; et
la saisie (530), par la SEU, d'un identifiant de la classe de différence correspondant à la première valeur de différence dans un modèle d'identification de message anormal pré-stocké, pour déterminer si le premier message est un message anormal ou un message non anormal,
dans lequel les différentes plages de valeurs des valeurs de différence correspondant aux différentes classes de différence dans la pluralité de classes de différence appartiennent à une pluralité de plages de valeurs prédéfinies, la pluralité de plages de valeurs prédéfinies sont obtenues en divisant, selon un algorithme de point d'arrêt naturel, une première plage de valeurs de la caractéristique dans lequel la première plage de valeurs de la caractéristique est basée sur une limite supérieure de la première plage de valeurs et une limite inférieure de la première plage de valeurs, la limite supérieure de la première plage de valeurs est une valeur maximale correspondant à la valeur de caractéristique dans un ensemble de données d'apprentissage du modèle d'identification de message anormal, et la limite inférieure de la première plage de valeurs est une valeur minimale correspondant à la valeur de caractéristique dans l'ensemble de données.

2. Procédé selon la revendication 1, dans lequel la valeur de caractéristique est un temps d'arrivée d'un message, et la première valeur de différence est un intervalle de temps d'arrivée entre un temps d'arrivée du premier message et un temps d'arrivée du deuxième message.

3. Procédé selon la revendication 1 ou 2, dans lequel le procédé comprend également :

la détermination, (810) par la SEU, d'une seconde valeur de différence entre la valeur de caractéristique du premier message et une valeur de caractéristique d'un troisième message, dans lequel le troisième message est un message non anormal qui est reçu avant que le premier message ne soit reçu ; et

la détermination (820), par la SEU à partir de la pluralité de classes de différence, d'une classe de différence correspondant à la seconde valeur de différence ; et

la saisie, (530) par la SEU, d'un identifiant de la classe de différence correspondant à la première valeur de différence dans un modèle d'identification de message anormal pré-stocké, pour déterminer si le premier message est un message anormal ou un message non anormal comprend :

la saisie (830), par la SEU dans le modèle d'identification de message anormal, de l'identifiant de la classe de différence correspondant à la première valeur de différence et d'un identifiant de la classe de différence correspondant à la seconde valeur de différence, pour déterminer si le premier message est un message anormal ou un message non anormal.

4. Procédé selon la revendication 3, dans lequel la valeur de caractéristique est le temps d'arrivée du message, et la seconde valeur de différence est un intervalle de temps d'arrivée entre un temps d'arrivée du premier message et un temps d'arrivée du troisième message.

5. Procédé selon la revendication 3 ou 4, dans lequel un identifiant de message du premier message, un identifiant de message du deuxième message et un identifiant de message du troisième message sont identiques.

6. Procédé selon la revendication 1 ou 2, dans lequel le deuxième message est un message non anormal.

7. Procédé selon l'une quelconque des revendications 1 à 6, dans lequel le procédé comprend également :

la détermination, par la SEU, d'informations de caractéristiques du premier message, dans lequel les informations de caractéristiques du premier message comprennent un ou plusieurs parmi des données de charge utile correspondant à chaque octet dans une charge utile valide du premier message, une longueur du premier message ou l'identifiant de message du premier message ; et

la saisie, par la SEU, d'un identifiant de la classe de différence correspondant à la première valeur de différence dans un modèle d'identification de message anormal pré-stocké comprend :

la saisie, par la SEU, de l'identifiant de la classe de différence correspondant à la première valeur de différence et aux informations de caractéristiques du premier message dans le modèle d'identification de message anormal.

8. Appareil (1300) permettant d'identifier un message anormal, comprenant :

une unité de réception (1310), configurée pour recevoir un premier message, et déterminer une première valeur de différence entre une valeur de caractéristique du premier message et une valeur de caractéristique d'un deuxième message, dans lequel le deuxième message est un message qui est reçu avant que le premier message ne soit reçu ;

une unité de traitement (1320), configurée pour déterminer, à partir d'une pluralité de classes de différence, une classe de différence correspondant à la première valeur de différence, dans lequel différentes classes de différence dans la pluralité de classes de différence correspondent à différentes plages de valeurs d'une valeur de différence ; et

l'unité de traitement (1320) est également configurée pour saisir un identifiant de la classe de différence correspondant à la première valeur de différence dans un modèle d'identification de message anormal pré-stocké, pour déterminer si le premier message est un message anormal ou un message non anormal,

dans lequel les différentes plages de valeurs des valeurs de différence correspondant aux différentes classes de différence dans la pluralité de classes de différence appartiennent à une pluralité de plages de valeurs prédéfinies, la pluralité de plages de valeurs prédéfinies sont obtenues en divisant, selon un algorithme de point d'arrêt naturel, une première plage de valeurs de la valeur de caractéristique, dans lequel la première plage de valeurs est déterminée sur la base d'une limite supérieure de la première plage de valeurs et d'une limite inférieure de la première plage de valeurs, la limite supérieure de la première plage de valeurs est une valeur maximale correspondant à la valeur de caractéristique dans un ensemble de données d'apprentissage du modèle d'identification de message anormal, et la limite inférieure de la première plage de valeurs est une valeur minimale correspondant à la valeur de caractéristique dans l'ensemble de données.

9. Appareil selon la revendication 8, dans lequel la valeur de caractéristique est un temps d'arrivée d'un message, et la première valeur de différence est un intervalle de temps d'arrivée entre un temps d'arrivée du premier message et un temps d'arrivée du deuxième message.

**10.** Appareil selon la revendication 8 ou 9, dans lequel l'unité de traitement (1320) est également configurée pour :

déterminer une seconde valeur de différence entre la valeur de caractéristique du premier message et une valeur de caractéristique d'un troisième message, dans lequel le troisième message est un message non anormal qui est reçu avant que le premier message ne soit reçu ;

déterminer, à partir de la pluralité de classes de différence, une classe de différence correspondant à la seconde valeur de différence ; et

saisir, dans le modèle **d'identification** de message anormal, **l'identifiant** de la classe de différence correspondant à la première valeur de différence et un identifiant de la classe de différence correspondant à la seconde valeur de différence, pour déterminer si le premier message est un message anormal ou un message non anormal.

**11.** Appareil selon la revendication 10, dans lequel la valeur de caractéristique est le temps **d'arrivée** du message, et la seconde valeur de différence est un intervalle de temps **d'arrivée** entre un temps **d'arrivée** du premier message et un temps d'arrivée du troisième message.

**12.** Appareil selon la revendication 10 ou 11, dans lequel un identifiant de message du premier message, un identifiant de message du deuxième message et un identifiant de message du troisième message sont identiques.

**13.** Appareil selon la revendication 8 ou **9,** dans lequel le deuxième message est un message non anormal.

**14.** Appareil selon l'une quelconque des revendications 8 à 13, dans lequel l'unité de traitement (1320) est également configurée pour :

déterminer des informations de caractéristiques du premier message, dans lequel les informations de caractéristiques du premier message comprennent un ou plusieurs parmi des données de charge utile correspondant à chaque octet dans une charge utile valide du premier message, une longueur du premier message ou l'identifiant de message du premier message ; et

saisir l'identifiant de la classe de différence correspondant à la première valeur de différence et aux informations de caractéristiques du premier message dans le modèle d'identification de message anormal.

**15.** Support lisible par ordinateur, dans lequel le support lisible par ordinateur stocke des codes de programme, et lorsque les codes de programme sont exécutés sur un ordinateur, l'ordinateur est amené à mettre en œuvre le procédé selon l'une quelconque des revendications 1 à 7.

FIG. 1

FIG. 2

EP 3 979 590 B1

FIG. 3

31

FIG. 4

An SEU receives a first message, and determines a difference value between a feature value of the first message and a feature value of a second message — 510

The SEU determines, from a plurality of preset classes, a first class corresponding to the difference value — 520

The SEU inputs the first class corresponding to the difference value into a pre-stored abnormal message identification model, to determine whether the first message is an abnormal message or a non-abnormal message — 530

FIG. 5

Class 1 = 0    Class 1 = 1    Class 1 = x    Class 1 = –1

Arrival time interval

$0$    $t_1$    $t_2$    $t_x$    $t_{max}$    $t_\infty$

FIG. 6

FIG. 7

An SEU receives a first message, and determines a difference value between a feature value of the first message and a feature value of a second message
510

The SEU determines, from a plurality of preset difference classes, a difference class corresponding to a first difference value
520

The SEU determines a second difference value between the feature value of the first message and a feature value of a third message
810

Determine, from the plurality of difference classes, a difference class corresponding to the second difference value
820

The SEU inputs an identifier of the difference class corresponding to the first difference value and an identifier of the difference class corresponding to the second difference value into an abnormal message identification model, to determine whether the first message is an abnormal message or a non-abnormal message
830

FIG. 8

FIG. 9

1000

FIG. 10

Obtain a training data set, where the training data set includes N first training messages and N identifiers of N difference classes corresponding to N first difference values corresponding to the N first training messages, the N first difference values are difference values between feature values of the N first training messages and feature values of corresponding N second training messages, the N first training messages are in a one-to-one correspondence with the N second training messages, the N second training messages are messages that arrive at a target node before the corresponding N first training messages arrive at the target node, different difference classes in the N difference classes correspond to different value ranges of the difference values, and N is a positive integer greater than 1

1110

Train a pre-stored original abnormal message identification model based on the training data set, to obtain an abnormal message identification model

1120

FIG. 11

Determine a maximum value of target difference values corresponding to a plurality of first training messages and a minimum value of feature values corresponding to the plurality of first training messages — 1130

Determine a first value range of the target difference value based on the maximum value and the minimum value — 1140

Divide the first value range of the target difference value into a plurality of non-overlapping value ranges — 1150

Map N first difference values and/or N second difference values corresponding to N first training messages to corresponding difference classes, to determine identifiers of difference classes corresponding to the N first difference values and/or identifiers of difference classes corresponding to the N second difference values. — 1160

Preparation process

Obtain a training data set, where the training data set includes N first training messages and N identifiers of N difference classes corresponding to N first difference values corresponding to the N first training messages, the N first difference values are difference values between feature values of the N first training messages and feature values of corresponding N second training messages, the N first training messages are in a one-to-one correspondence with the N second training messages, the N second training messages are messages that arrive at a target node before the corresponding N first training messages arrive at the target node, different difference classes in the N difference classes correspond to different value ranges of the difference values, and N is a positive integer greater than 1 — 1110

Model training process

Train a pre-stored original abnormal message identification model based on the training data set, to obtain an abnormal message identification model — 1120

FIG. 12

Apparatus 1300

Receiving unit 1310

Processing unit 1320

FIG. 13

Apparatus 1400

Obtaining unit 1410

Processing unit 1420

FIG. 14

Computing device 1500

Memory
1510

Processor
1520

Communications
connection

Input/Output
interface
1530

FIG. 15

**EP 3 979 590 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3113529 A1